# EUROPEAN PATENT SPECIFICATION

(11) **EP 1 505 275 B1**
(45) Date of publication and mention of the grant of the patent: **10.01.2007**
(21) Application number: 04026690.0
(22) Date of filing: 05.07.2001
(51) Int. Cl.: F02B 61/02, F01P 1/06, F01P 5/02, F16H 57/04, F02B 75/20

(54) **Engine**
Motor
Motor

(30) Priority: 05.07.2000 JP 2000203287; 05.07.2000 JP 2000203344
(43) Date of publication of application: 09.02.2005
(62) Divisional of application: 01116359.9
(73) Proprietor: YAMAHA HATSUDOKI KABUSHIKI KAISHA, Iwata-shi, Shizuoka-ken (JP)
(72) Inventor: Shiraoya, Takehiko, Iwata-Shi Shizuoka-ken (JP)
(74) Representative: Grünecker, Kinkeldey, Stockmair & Schwanhäusser Anwaltssozietät

(56) References cited:
- EP-A- 0 756 110
- US-A- 4 395 249
- US-A- 4 671 782
- US-A- 4 697 665
- PATENT ABSTRACTS OF JAPAN vol. 2000, no. 07, 29 September 2000 (2000-09-29) & JP 2000 120847 A (SUZUKI MOTOR CORP), 28 April 2000 (2000-04-28)

## Description

This invention relates to an engine, in particular for a motorcycle, having a crankcase and a transmission having a transmission case.

Prior art document EP 0 756 110 A2 teaches a continuously variable transmission system of the V-belt type in particular for a motorcycle, comprising a first drive pulley connectable to a crankshaft of an engine unit and second drive pulley connectable to a drive shaft. Further, there is provided a V-belt connecting both first and second drive pulleys, a transmission case body and a transmission case cover constituting a transmission case accommodating a belt chamber. The transmission case and the crank case of the engine are fitted to each other such that a power unit is constituted. In addition, a cooling device for cooling said belt chamber is provided. The transmission case cover comprises a front transmission case cover and a rear transmission case cover as seen in driving direction, whereby at the joining area between the front transmission case cover and the rear transmission case cover there is defined a suction inlet directed to the rear direction opposite to the driving direction.

Prior art document US 4,697,665 teaches a recreational vehicle having an enclosed, air cooled, variable speed, split sheave V-belt transmission. The transmission is enclosed by a housing having cooperatively located intake and exhaust ports connected respectively to intake and exhaust air conduits. One sheave of each pulley of the transmission includes a plurality of air propelling fins to generate air flow through the housing.

Some engines are provided with a V-belt type of CVT, with the CVT comprising a transmission case located on a side portion of the crankcase in which are disposed a drive pulley, a driven pulley, and a V-belt.

A problem with the conventional engine described above is that, since the transmission case is formed integrally with the side wall of the crankcase, heat of the engine, especially that of lubricant oil is likely to be transmitted to the interior of the transmission case, which in turn raises the temperature in the transmission case, and the cooling is insufficient.

It is, therefore, an object of the present invention to provide an improved engine not endangered to overheat during performance.

Said object is solved by an engine, in particular for a motorcycle, having the features of independent claim 1.

Preferably, an air cooling means for cooling said transmission, wherein cooling air is routed through said transmission case and said clearance.

Further, preferably, said air cooling means is configured to draw cooling air through the clearance into the transmission case and to discharge air which has cooled the transmission through an air outlet formed on an outer side of the transmission case with respect to the crankcase.

Furthermore, preferably, said air cooling means is configured to draw cooling air into the transmission case through an air inlet formed on an outer side of the transmission case and to discharge air which has cooled the transmission through the clearance.

Still further, preferably, said transmission is a V-belt type constantly variable transmission and said transmission case is a belt case for housing a speed changing device of the V-belt type.

Moreover, preferably, said speed changing device of the V-belt type comprises a drive pulley with a stationary pulley half and a moveable pulley half, and a driven pulley with a stationary pulley half and a moveable pulley half, an endless V-belt entrained between said drive and driven pulley, wherein a plurality of air cooling vanes is provided on at least one of said pulley halves.

Also, preferably, said air cooling vanes are provided on at least one of the pulley halves of the driven pulley and/or said drive pulley.

According to a preferred embodiment said air cooling vanes are provided on at least one of the moveable pulley halves and/or of the fixed halves.

According to a further preferred embodiment a cooling air introduction means is provided on a drive pulley side and/or on a driven pulley side of said transmission case.

According to a furthermore preferred embodiment said air cooling means comprises a cooling air cleaner means.

According to still a further preferred embodiment said outlets are formed to be located in the area of the transmission case below the line interconnecting shafts of said drive and driven pulley.

Also according to a preferred embodiment said inlet is formed to be located above a shaft of the driven pulley.

Further, preferably, an air inlet is formed rearwardly of a shaft of the driven pulley at said transmission case.

Furthermore, preferably, an air inlet is formed in an area between shafts of said drive pulley and said driven pulley at said transmission case.

Still further, preferably, an air outlet is formed forwardly of a shaft of said drive pulley at said transmission case.

Moreover, preferably, an air outlet is formed in an area between shafts of said drive pulley and said driven pulley at said transmission case.

Accordingly, thereby an engine can be provided having a cooling system capable of obtaining sufficient cooling performance with only the air supply with the blower vanes provided on the pulley.

Moreover, such a provision of a transmission chamber cooling structure for an engine can prevent a rise in temperature in the transmission chamber by introducing a sufficient amount of outside air thereinto.

Further, preferred embodiments of the present invention are laid down in the respective dependent claims.

In the following, the present invention is explained in greater detail with respect to several embodiments thereof in conjunction with the accompanying drawings, wherein:
- FIG. **1**: is a plan view of an engine of an embodiment;
- FIG. **2**: is a side view of the same engine;
- FIG. **3**: is a sectional plan view of the crankshaft portion of the same engine;
- FIG. **4**: is an enlarged view of the crankshaft right end portion;
- FIG. **5**: is a cross-sectional plan view of a V-belt type of CVT of the same engine;
- FIG. **6**: is a side view of the V-belt type of CVT;
- FIG. **7**: is a sectional rear view of the driven pulley portion of the V-belt type of CVT;
- FIG. **8**: is a sectional plan view of the clutch mechanism portion of the same engine;
- FIG. **9**: is a right side view of the crankcase portion of the same engine;
- FIG. **10**: is a left side view of the same engine with the left case cover removed;
- FIG. **11**: shows the sections XIVa-XIVa, XIVb-XIVb, and XIVc-XIVc in FIG. **10**;
- FIG. **12**: is a side view as seen from inside of the left cover of the same engine;
- FIG. **13**: shows the section XVIII-XVIII in FIG. **9;**
- FIG. **14**: shows the section XIX-XIX in FIG. **9**;
- FIG. **15**: is a left side view of the right case of the same engine;
- FIG. **16**: is a left side view of the transmission case of the same engine;
- FIG. **17**: shows the section IIXII-IIXII in FIG. **16**;
- FIG. **18**: shows the section IIXIII-IIXIII in FIG. **16**;
- FIG. **19**: is a side view as seen from inside of the inside case of the transmission case;
- FIG. **20**: is a side view as seen from inside of the outside case of the transmission case;
- FIG. **21**: is a side view of the cooling water system of the same engine;
- FIG. **22**: is a plan view of the above cooling water system;
- FIG. **23**: is a simplified conceptual elevation of the radiator of the above cooling water system;
- FIG. **24**: shows the section IIIXI-IIIXI in FIG. **25**;
- FIG. **25**: is a left side view of a scooter type of two-wheeled vehicle with the same engine mounted;
- FIG. **26**: is a side view of a scooter-type motorcycle of a further embodiment;
- FIG. **27**: is a side view illustrating the constitution of an air intake system of the scooter-type motorcycle of Fig. **25**;
- FIG. **28**: 35 is a plan cross-sectional view of an engine unit of the scooter-type motorcycle of Fig **26** and **27**; and
- FIG. **29**: is a plan cross-sectional view of a belt case embodying a cooling structure according to the embodiment.

The embodiments are described below in reference to the appended drawings.

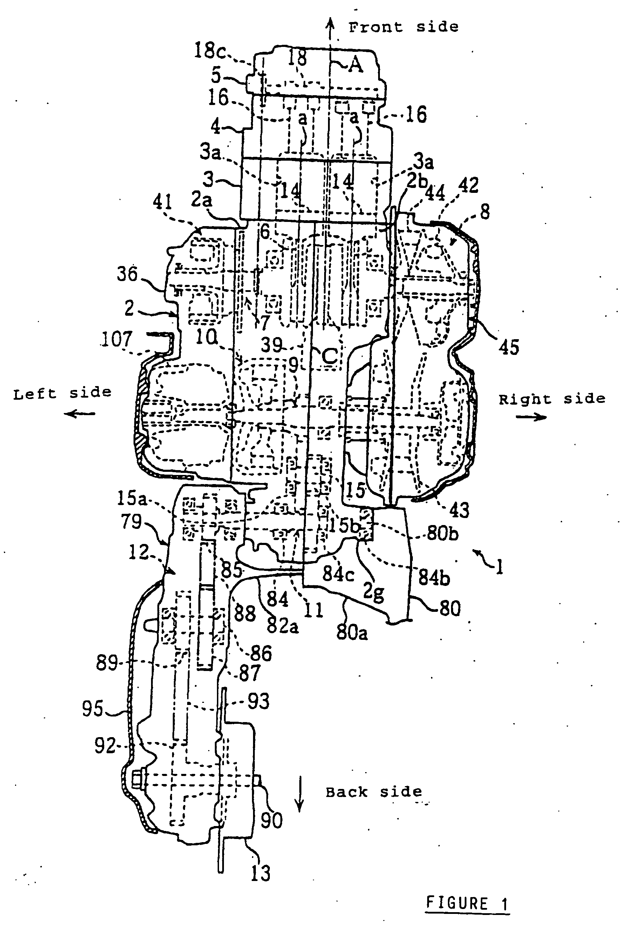

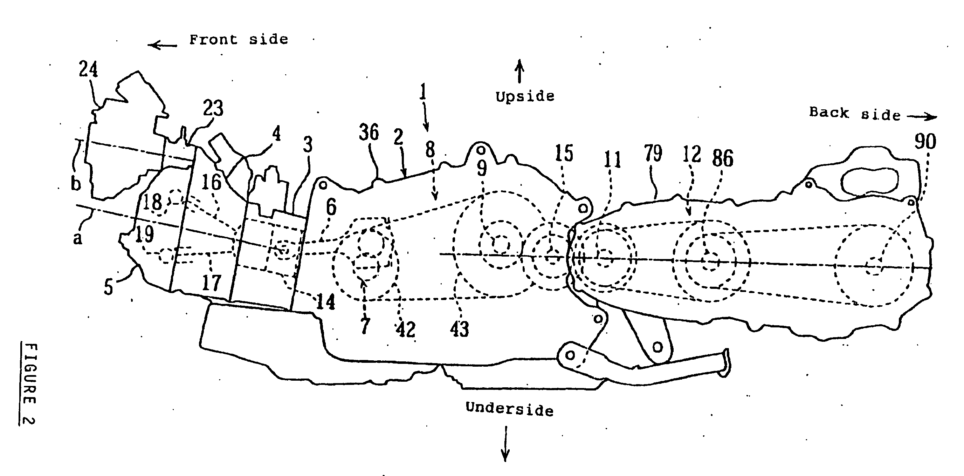

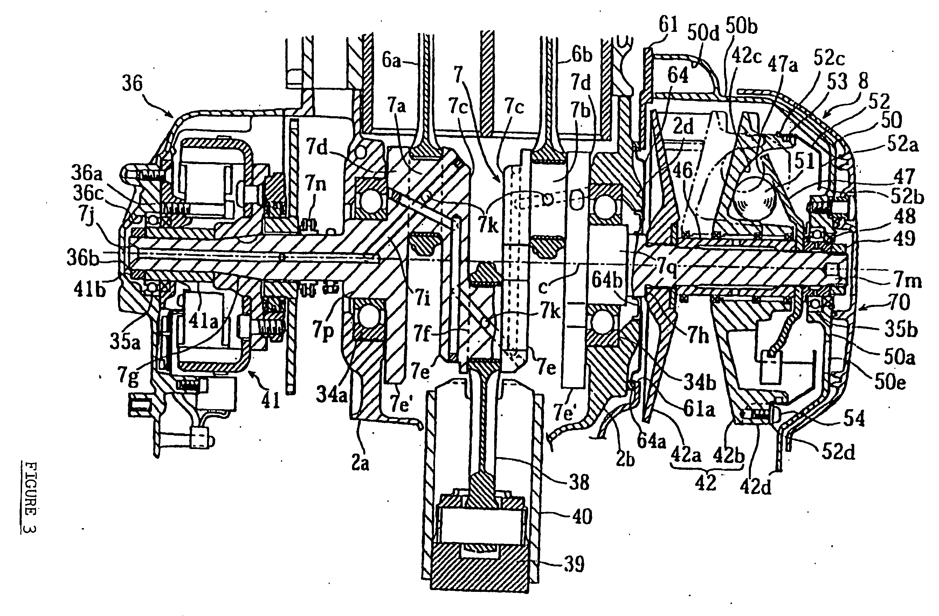

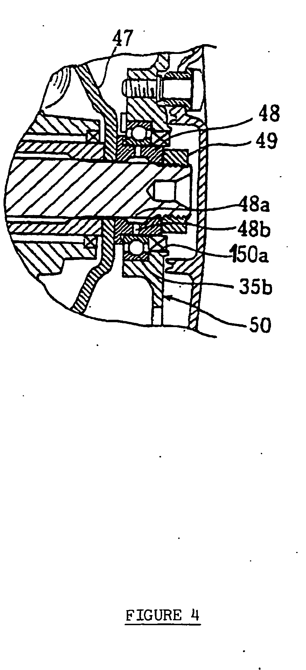

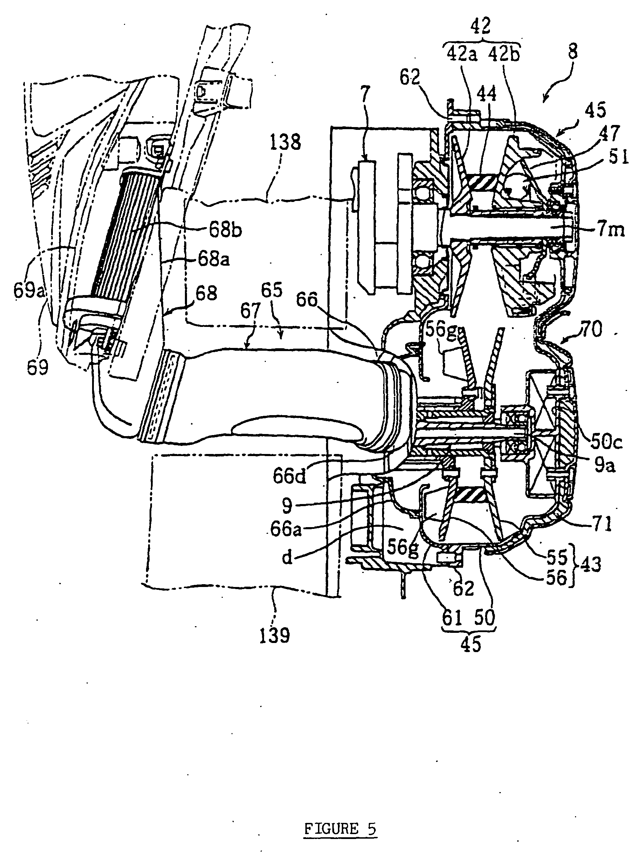

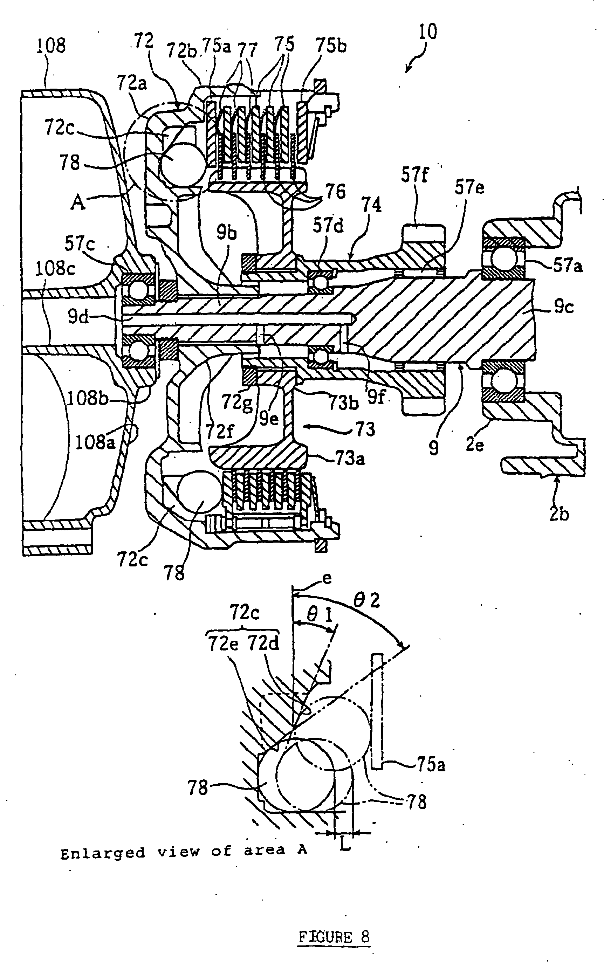

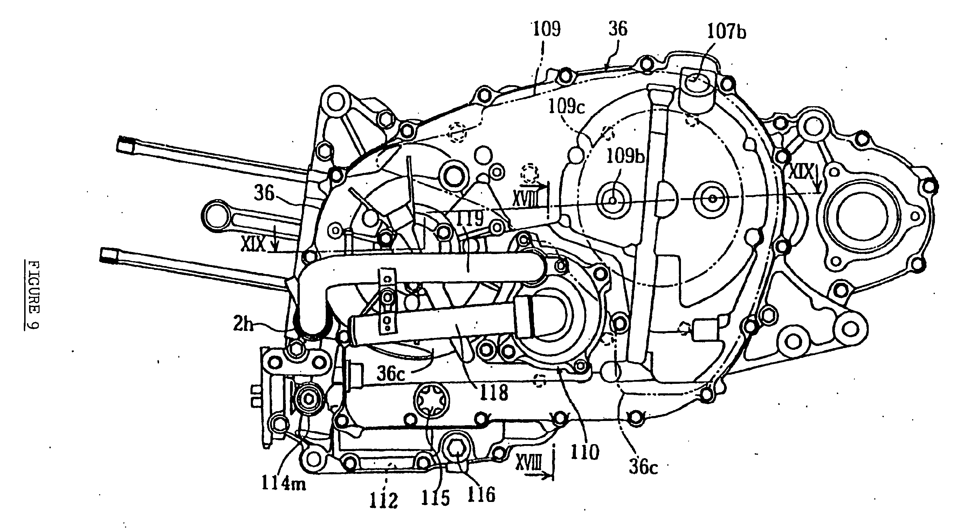

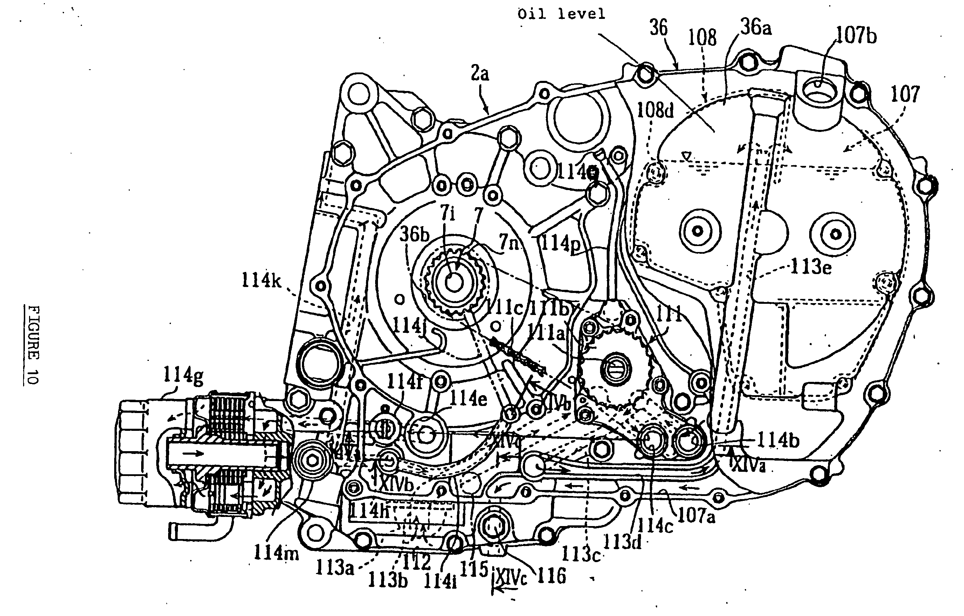

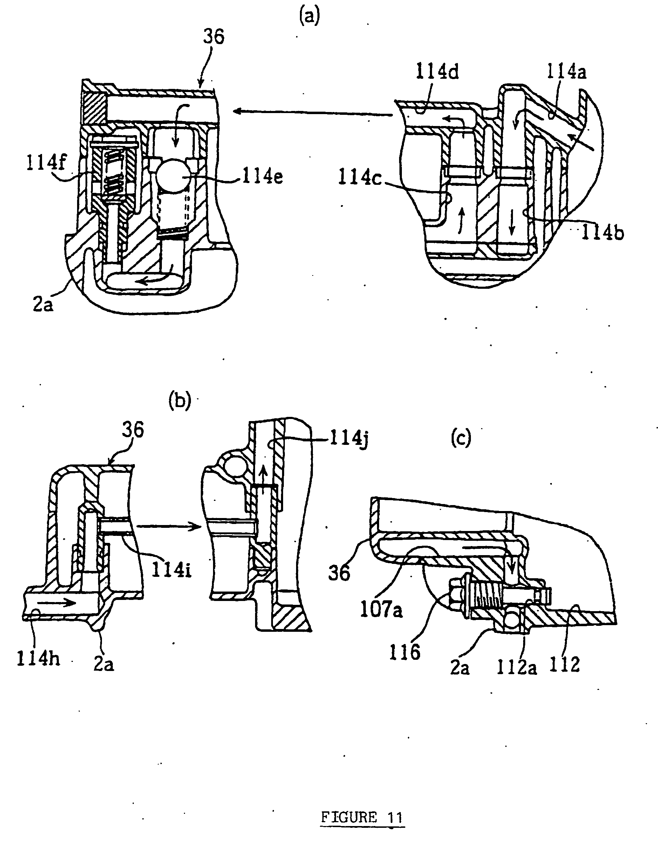

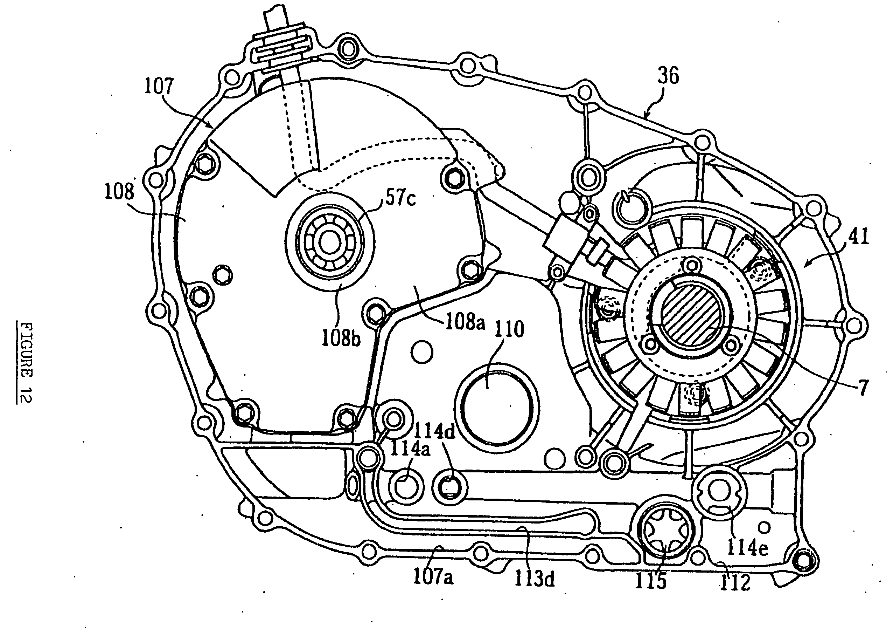

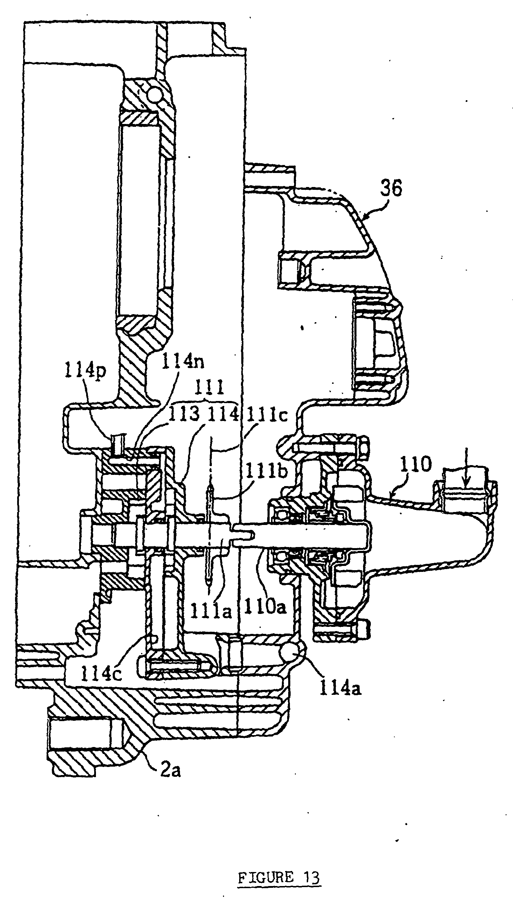

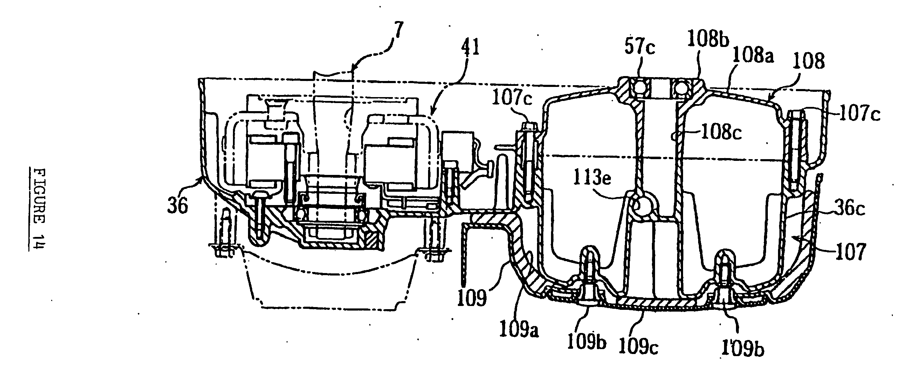

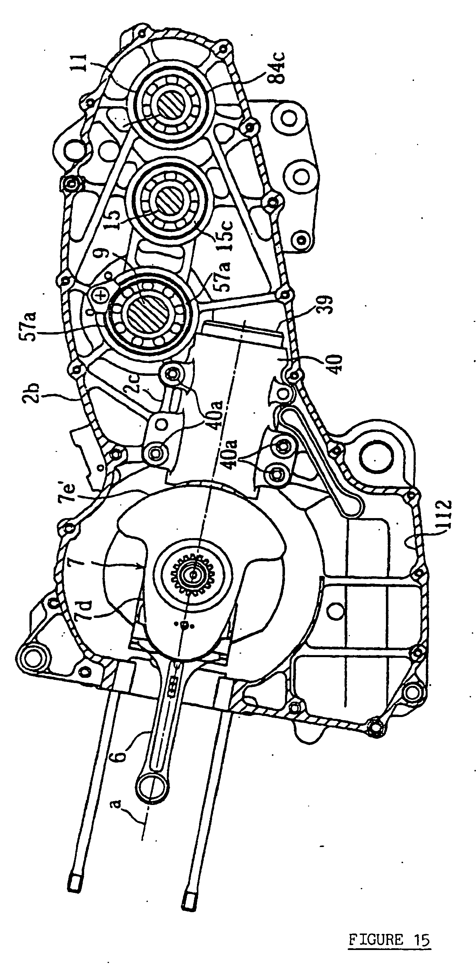

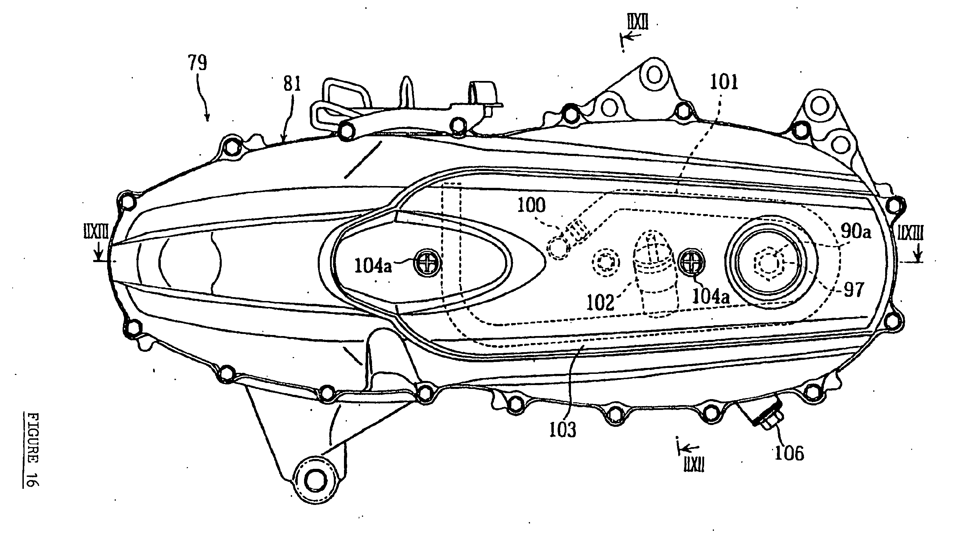

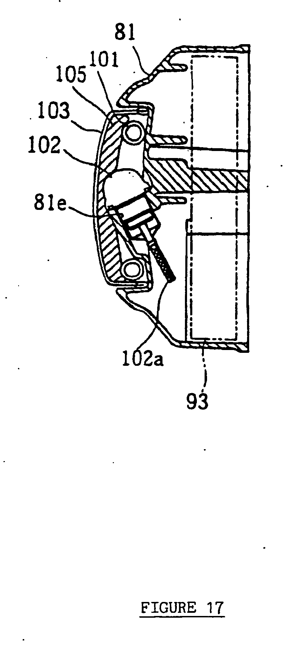

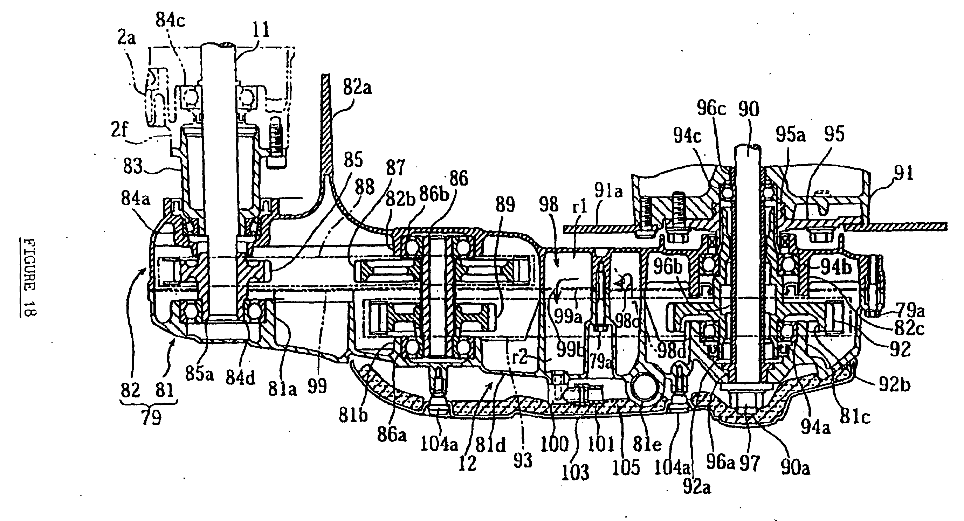

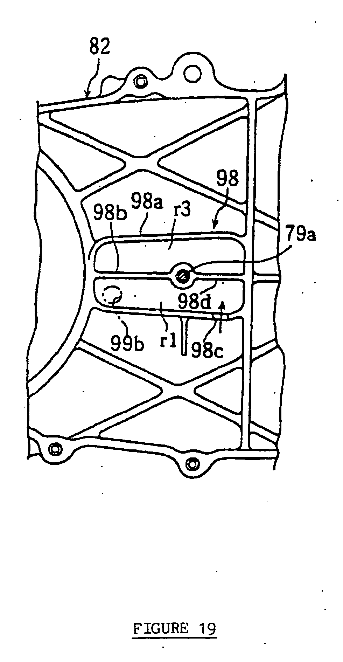

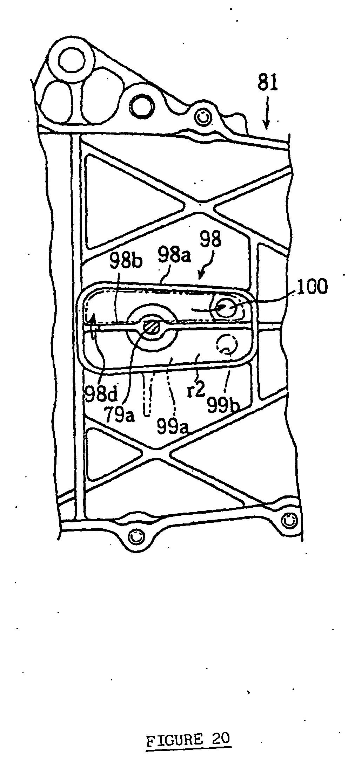

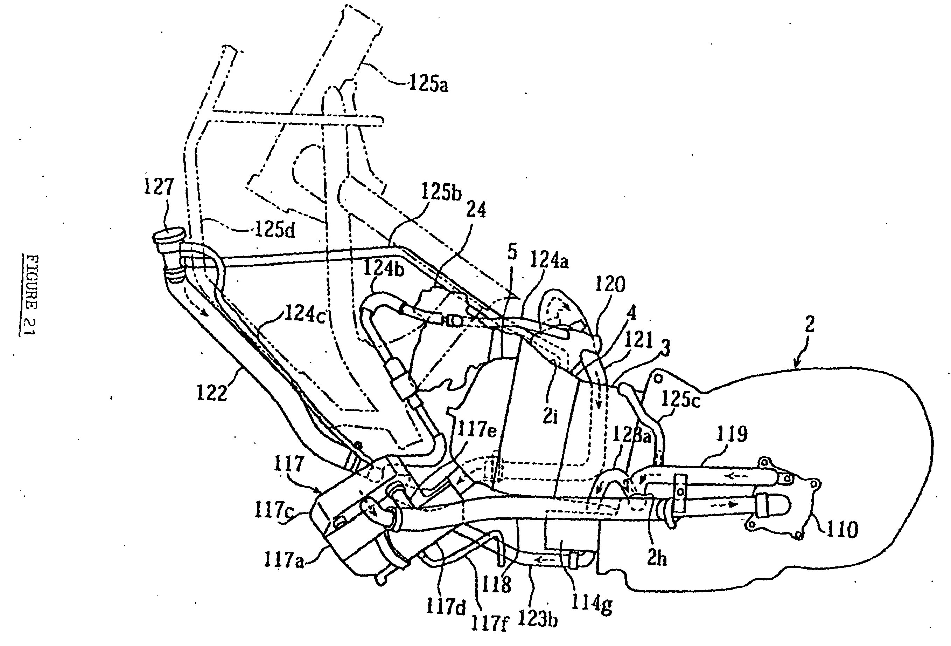

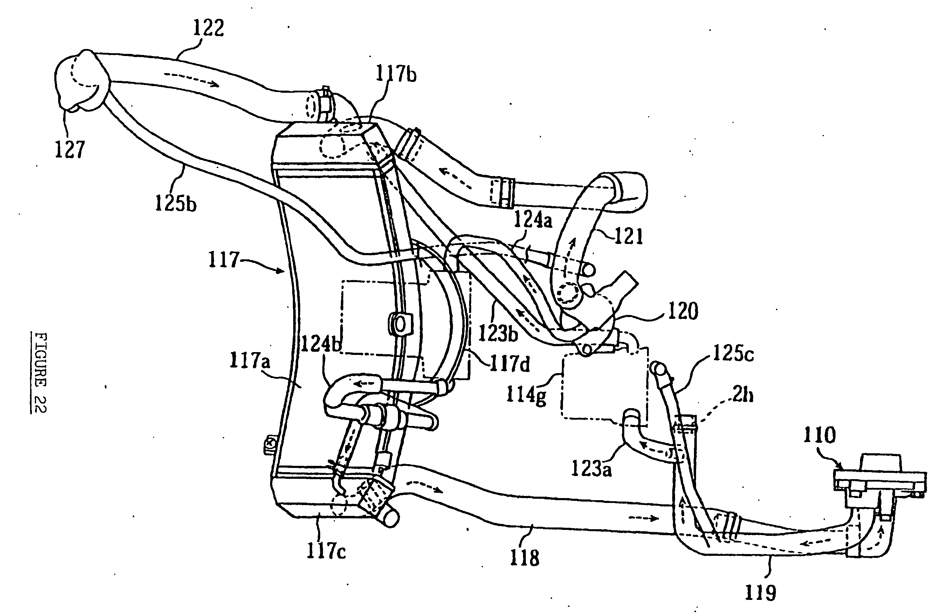

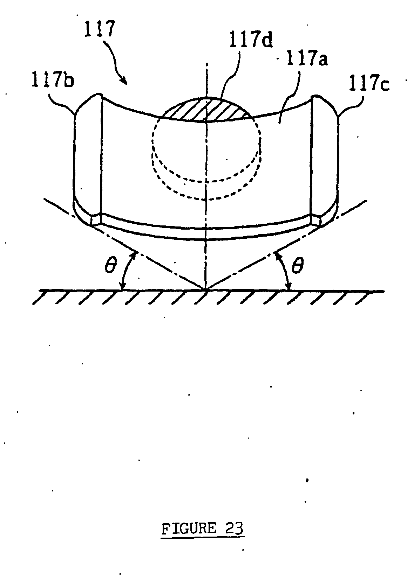

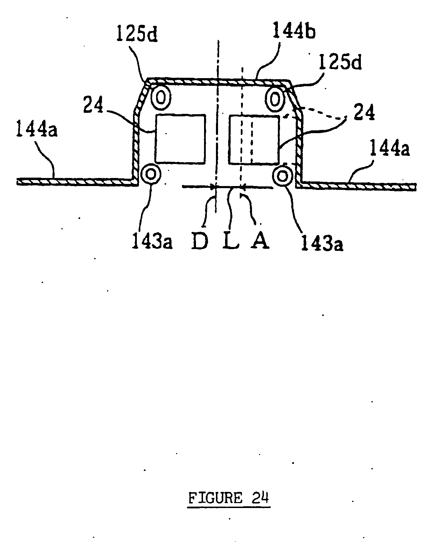

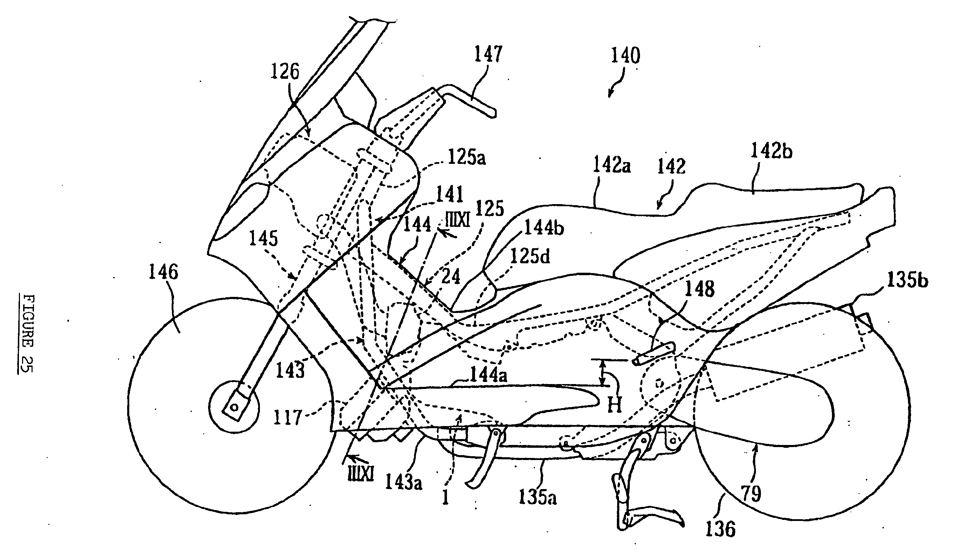

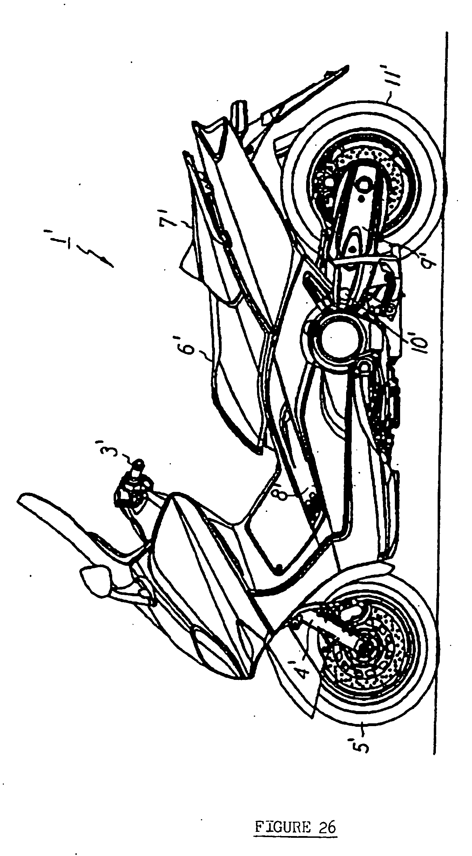

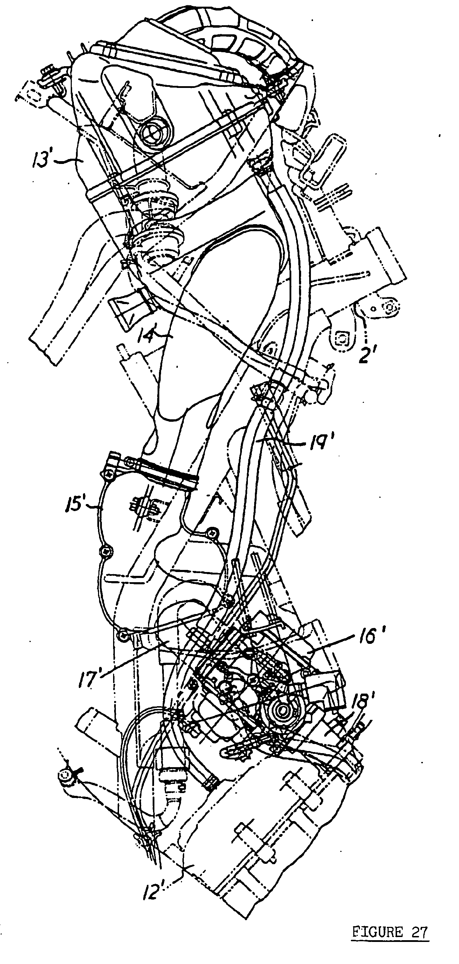

FIGs. 1 to 33 are used to explain an embodiment. FIGs. 1 and 2 are respectively plan view and side view of an engine unit. FIG. **3** is a sectional plan view of a crankshaft portion. FIG. **4** is an enlarged view of the right end portion of the crankshaft. FIGs. **5**, **6**, and **7** are respectively a sectional plan view, a right side view, and a sectional rear view of a V-belt type of CVT. FIG. **8** is a sectional plan view of a centrifugal multi-plate clutch mechanism. FIGs. **9**, **10**, and **11** are respectively a left side view, a left side view partially in section, and sectional views of various parts of the crankcase. FIG. 12 is a side view as seen from inside the left case cover. FIG. **13** is a sectional front view of the portion including a cooling water pump and a lubricant oil pump. FIG. **14** is a sectional plan view of the left case cover. FIG. **15** is a side view as seen from inside the right cover. FIG. **16** is a left side view of a transmission case. FIG. **17** is a sectional rear view of an outside case. FIG. **18** is a sectional plan view of a transmission case. FIGs. **19** and **20** are respectively side views of an inside case and an outside case. FIGs. **21** and **22** are respectively a left side view and a plan view of cooling water piping. FIG. **23** is a front view of a radiator. FIG. **24** is a sectional rear view of a foot board portion. FIG. **25** is a side view of a two-wheeled motor vehicle of a scooter type.

Incidentally, the terms right and left unless otherwise defined are meant as seen from a rider sitting astride on the seat.

First, general constitution is described.

In the drawings (especially Fig. **25**) is shown a scooter type of two-wheeled motor vehicle 140. The two-wheeled motor vehicle 140 has a vehicle body frame 141 made up of paired right and left main pipes 125, each extending from a front end head pipe 125a obliquely downward toward the portion where a seat 142 is mounted and having an upper side portion 125d farther extending toward the rear, and paired right and left down tubes 143, each extending from the head pipe 125a toward below the main pipe 125 and having a lower side portion 143a farther extending rearward. A front fork 145 is supported for free steering in right and left directions by means of the head pipe 125a. A front wheel 146 is shaft-supported at the lower end of the front fork 145. Steering handlebars 147 are secured to the upper end of the front fork 145.

The area from the upper side portion 125d of the main pipe 125 to the lower side portion 143a of the down tube 143 is surrounded with a foot board 144. The foot board 144 has paired right and left, low-level, foot placing portions 144a, and a tunnel portion 144b rising between both of the foot placing portions 144a.

The seat 142 is of a tandem type having a front seat portion 142a for a driver to sit astride and a rear seat portion 142b for a rear rider to sit astride. Rear rider steps 148 are provided behind below the front seat portion 142a. The rear rider steps 148 are positioned higher than the driver's foot placing portions 144a by a dimension of H and secured to the vehicle body frame 141 with bolts tightened.

An engine 1 is placed in a position within the foot board 144, between the right and left main frames or pipes 125 and between the down tubes 143. The engine 1 is secured to the vehicle body frame 141 indirectly through vibration absorbing rubbers or directly by tightening bolts. The rotation of the engine 1 is transmitted from the crankshaft 7 through a V-belt type of CVT 8 to a main shaft 9, through a centrifugal multi-plate clutch mechanism 10 mounted on the main shaft 9 to an intermediate shaft 15 and to a drive shaft 11, farther from the drive shaft 11 to a chain type transmission mechanism 12 to the rear wheel 136 (see Figs. 1, 2 and **25**).

The engine 1 is of a water-cooled, four-stroke cycle type, and is roughly constituted as follows: The engine 1 has parallel two cylinders, each with four valves. At the front wall of a crankcase 2 made up of left and right split cases 2a and 2b are placed; a cylinder block 3, a cylinder head 4, and a head cover 5, one over another, with the cylinder bore axis (a) sloping up slightly from the horizontal line. Pistons 14, 14 are slidably inserted in cylinder bores 3a, 3a bored in the cylinder block 3, with the pistons 14, 14 connected through connecting rods 6, 6 to a crankshaft 7 of 360 degree phase.

Next, the structure for lubricating the engine balancer device and the crankshaft is described.

The crankcase 2 is dividable into left and right cases 2a and 2b along the left-right dividing plane C running at right angles to the crankshaft 7. A reciprocating type of balancer device is positioned astride the dividing surface. The balancer device is constituted, in rough explanation, with a balancer cylinder 40 disposed to extend in the direction opposite the cylinder axis (a) and astride the left and right cases, and secured to the right case 2b, with a balancer piston 39 slidably inserted in the balancer cylinder 40, and with the balancer piston 39 connected through a balancer connecting rod 38 to a balancer off-center pin 7f of the crankshaft 7 (see Fig 1 and 3 8).

Left and right crank pins 7a and 7b to which the respective connecting rods 6a, 6bare connected are displaced from the crankshaft axis (c) by means of crank arms 7d and 7c. Balancer weights 7e and 7e, of the inner side crank arms 7c and 7c out of the four crank arms, extending in the direction opposite the crank pin side also serve as the balancer crank arms for supporting the balancer off-center pin 7f to which the balancer connecting rod 38 is connected.

Left and right crank pins 7a and 7b of the crankshaft 7 to which pins the left and right connecting rods 6a and 6b are connected are displaced radially outward from the crankshaft axis by means of the inside and outside crank arms 7c and 7d by a dimension of a half the piston stroke of the engine. The left and right crank journal portions 7p and 7q, of the crankshaft 7, adjacent the crank arms 7d and 7d are supported with large-diameter, left and right main bearings 34a and 34b. The left and right ends of the crankshaft 7 are supported with small-diameter sub-bearings 35a and 35b. The main bearings 34a and 34b are located as seen in plan view symmetrically on left and right sides of an engine center line (A) which passes the middle of the left and right cylinder bore axes (a), (a), and fitted into and supported with the left and right cases 2a and 2b.

A flywheel magneto 41 is fitted onto the left end tapered portion 7g of the crankshaft 7 and tightly secured through a collar 41 a using a nut 41 b. The left end sub-bearing 35a is attached to the end portion of the collar 41 a, and fitted into and supported with a bearing boss portion 36a of a case cover 36 fitted to the left mating surface of the left case 2a.

The outside crank arms 7d and 7d supporting the left and right crank pins 7a and 7b have balancer weights 7e' and 7e' extending beyond the crankshaft axis on the side opposite the crank pins 7a and 7b. The inside crank arms 7c and 7c are interconnected with the balancer pin 7f of the balancer mechanism. The balancer pin 7f is offset from the crankshaft axis by a dimension slightly smaller than half the piston stroke. To the balancer pin 7f is connected through the balancer connecting rod 38 to the balancer piston 39 inserted for free sliding in the balancer cylinder 40.

Here, since the dividing plane C of the left and right cases 2a, 2b is displaced leftward from the center line (A) of the engine, most part of the balancer cylinder 40 is located in the right case 2b. The balancer cylinder 40 is secured by tightening bolts 40a to a support rib 2c formed on the inside surface of the right case 2b. The balancer cylinder 40 is positioned so that its axis is on the same straight line with the crankshaft axis as seen in the direction of the crankshaft axis, and that both axes are parallel as seen in plan view (see Fig **15**).

The crankshaft 7 is provided with an oil hole 7i for guiding lubricant oil fed under pressure from a lubricant oil pump to sliding surfaces of the connecting rods 6a, 6b, and crank pins 7a, 7b. The oil hole 7i is open (7j) at the left end surface of the crankshaft 7 and is not open at the right end surface. The opening 7j is located in an oil supply chamber 36b formed in the left case cover 36. The oil supplied to the oil supply chamber 36b is supplied through the oil hole 7i and a communication hole 7k to the above-mentioned rotary slide connecting parts.

Here, while the engine of this embodiment is provided with a dry type of CVT mechanism 8 on the right hand end of the crankshaft 7, since lubricant oil for lubricating the crankshaft is supplied from the left hand end as described above, there is no possibility of lubricant oil soiling the V-belt on the right hand end.

Next will be described the V-belt type of CVT mechanism 8.

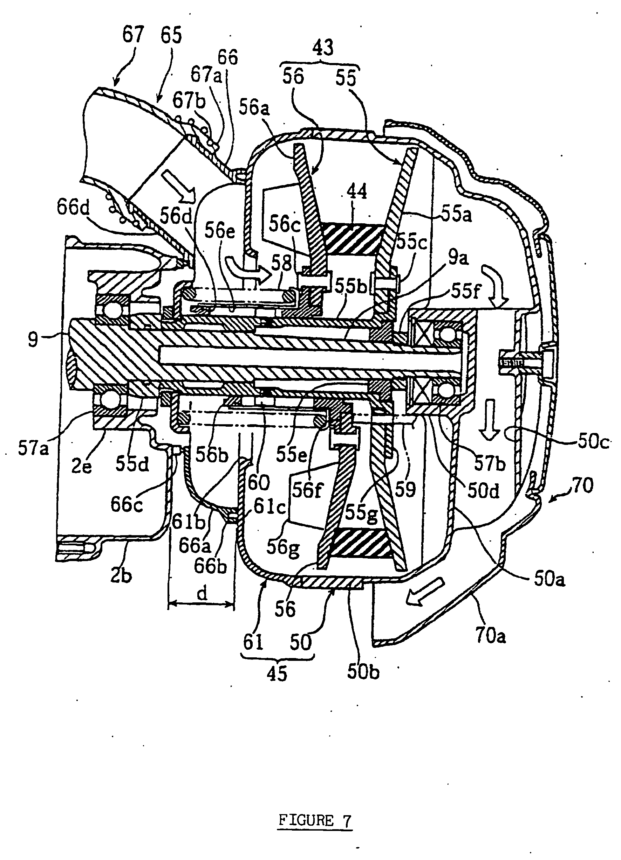

To roughly describe the constitution of the V-belt type of CVT mechanism 8 of this embodiment, a drive pulley 42 is attached to the right end 7m of the crankshaft 7. A driven pulley 43 is attached to the right end of a main shaft 9 placed parallel to and behind the crankshaft 7. A V-belt 44 is placed to girdle both of the pulleys 42 and 43. The above arrangement is surrounded with a belt case (belt chamber) 45 formed separately from the crankcase 2 (see Fig **5** and **7**).

The drive pulley 42 is made up of a stationary pulley half 42a fixed to the right end 7m of the crankshaft 7 and a movable pulley half 42b attached for free sliding in the axial direction on the right end 7m. The stationary pulley half 42a is spline-fitted to the right end 7m and secured by tightening a nut 49 through; a slide collar 46, a cam plate 47 and a collar 48. The sub-bearing 35b is attached to the collar 48, and fitted into and supported with the outside case 50 of the belt case 45 (see Fig **3** and **4**).

On the reverse side of the movable pulley half 42b is formed a cam surface 42c curving axially outward toward its circumference. The cam surface 47a of the cam plate 47 is tilted axially inward toward its periphery. The space between both of the cam surfaces 42c and 47a is filled with grease, and weights 51 are placed in the space. As the revolution of the crankshaft 7 increases, the weights 51 move radially outward by centrifugal forces to move the movable pulley half 42b axially inward. As a result, the belt girdling radius of the pulley increases to reduce speed reduction ratio.

A cover plate 52 for intercepting thrown grease is attached to the movable pulley half 42b. The cover plate 52 is made of sheet metal in an annular shape with its bottom surface 52a having an opening 52b, with an oil seal 53 interposed between its cylindrical portion 52c and the outside cylindrical surface of the movable pulley half 42b. A flange portion 52d formed by bending part of the cylindrical portion 52c in the radial direction is secured by tightening a bolt 54 to a boss portion 42d raise-formed on the periphery of the movable pulley half 42b.

As described above, attachment of the cover plate 52 to the movable pulley half 42b is done by bolt-tightening the flange portion 52d formed on the outer side than the oil seal 53, and the oil seal 53 is interposed. Therefore, grease is prevented from seeping out due to the rotation of the crankshaft 7. In this connection, if the bolt tightening position is radially inner than the oil seal 53, the centrifugal force will cause the grease present around the weights 51 to flow outward and seep out from around the bolt tightening position. To prevent it, another seal member will be required around the bolt. In the present embodiment, however, the grease is prevented from leaking without such an additional seal member.

The inside surface of the collar 48 attached to the right end 7m of the crankshaft 7 is provided with an annular recess 48a to form a grease reservoir together with the outside surface of the right end 7m of the crankshaft 7, and also provided with a communication hole 48b for connecting the grease reservoir to the fitting surfaces of the inner race of the sub-bearing 35b and the collar 48. The grease reservoir contains grease to prevent frictional heat produced with the rotation of the inner race of the subbearing 35b relative to the collar 48 and the crankshaft 7.

While it is a common practice to apply heat treatment for increasing the surface hardness of part of the crankshaft 7 surface where the sub-bearing 35b is attached, since the bearing is attached to the collar 48 in this embodiment, the heat treatment is applied to the collar 48. Therefore, unlike in an arrangement of attaching a bearing directly to the right end 7m of the crankshaft 7, the crankshaft surface need not be heat-treated. This reduces cost for the heat treatment and if the collar 48 wears, it can be easily replaced, also reducing the cost.

Here, the nut 49 is exposed out of the through hole 150a formed in the outside case 50 so that the crankcase 7, in the state of the outside case 50 remaining attached, can be rotated by engaging a tool with the nut 49. This improves the ease of checkup and maintenance as the crankcase 7 can be rotated in the state of only the case cover 51 removed, without removing the outside case 50.

Incidentally, for example in case of a scooter type of two-wheeled vehicle on which the engine of this embodiment is mounted, many components must be removed at the time of checkup and maintenance before removing the outside cover 50 because most part of the V-belt type of CVT 8 is covered with a vehicle body cover. Therefore, if a constitution is employed which requires removal of the outside case 50 at the time of checkup and maintenance, ease of checkup and maintenance work becomes poor. This embodiment, however, is free from such a problem.

The driven pulley 43 is made up of a stationary pulley half 55 fixed to the right end portion 9a of the main shaft 9 and a movable pulley half 56 attached in a position inner than the stationary pulley half 55 for free sliding in the axial direction. The stationary pulley half 55 comprises a pulley main part 55a made of iron to the axial center of which is secured a guide cylinder 55b made of aluminium alloy and secured using rivets 55c. The guide cylinder 55b extends inward in the vehicle width direction, spline-fits to the right end 9a, and is secured to the right end 9a by tightening a nut 55f through collars 55e and 55d to the bearing 57a (see Fig **5** and **7**).

The movable pulley half 56 comprises a pulley main part 56a made of iron to the axial center of which is secured with rivets 56c a slide cylinder 56b made of aluminium alloy in a cylindrical shape. The slide cylinder 56b extends inward in the vehicle width direction and is slidably fitted on the guide cylinder 55b. The slide cylinder 56b is formed with a cam groove 56d extending in axial direction. The cam groove 56d is covered with a guide pipe 56e. A torque cam 60 slidably engages with the inside of the cam groove 56d. The torque cam 60 is screwed to and secured to the guide cylinder 55b. The slide cylinder 56b is urged with a forcing spring 58 in the direction of increasing the belt girdling radius on the pulley. In FIG. 7, the upper half of the drawing shows the state of the pulley diameter being minimum and the lower half shows the state of the pulley diameter being maximum.

The reverse side (opposite the belt engagement surface) of the pulley main part 56a has integrally formed plural vanes 56g for blowing air. The size of the vanes 56g is set to produce a small clearance relative to the inside case 61 of the belt case 45 when the movable pulley half 56 moves further inward from the minimum belt girdling radius position of the pulley.

The torque cam 60 serves to move the movable pulley half 56 quickly to a greater belt girdling radius position on the pulley by rotating the movable pulley half 56 relative to the stationary pulley half 55 and to transmit a greater torque to the rear wheel when a greater torque is required as in a quick acceleration. In this embodiment, however, the torque cam 60 serves also to restrict the amount of axial inward travel of the movable pulley half 56. That is, if the movable pulley half 56 moves more inward than the position for the minimum belt girdling radius, the torque cam 60 butts against the right end shown in the drawing of the cam groove 56d and is prevented from moving farther. In this way, the vanes 56g are arranged not to come into contact with the inside case 61 even if the movable pulley half 56 moves more inward than the position for the minimum belt girdling radius from one cause or another.

Here, the symbol 59 denotes a servicing bolt to be temporarily screwed in when the V-belt 44 is to be removed and replaced at the time of checkup service. When the bolt 59 is screwed into the overlapped portions of the pulley main part 55a of the stationary pulley half 55 and the flange portion 55g of the guide cylinder 55b, the movable pulley half 56 is moved against the urging force of the forcing spring 58, so that the V-belt 44 can be removed and replaced. In this embodiment, the diameter of the inside circumferential edge 56f of the pulley main part 56a is set so that the tip of the servicing bolt 59 contacts the inside circumferential edge 56f. This prevents the servicing bolt 59 from contacting the aluminium alloy-made slide cylinder 56b and causing it to yield.

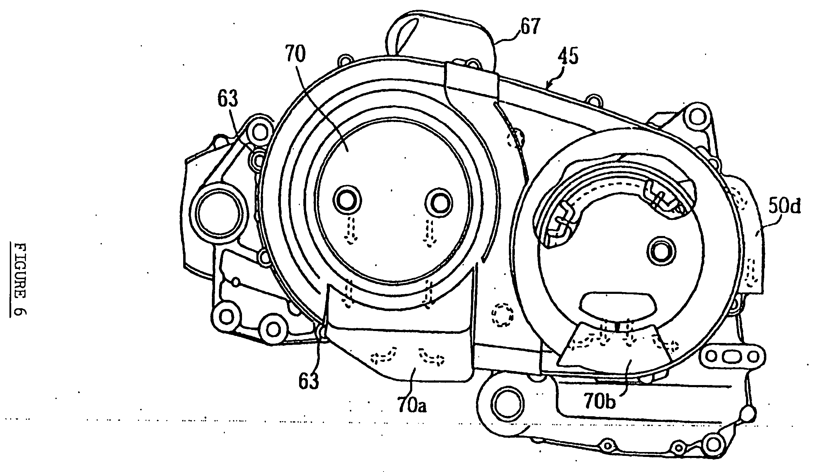

The belt case 45 is made of aluminium alloy, completely separately from the crankcase 2, with two, right and left split parts; the outside case 50 and the inside case 61. The relative positioning of the right and left cases 50 and 61 is done by the use of a dowel 62 and both cases are secured to the right case 2b by means of a bolt 63. The external surface of the belt case 45 is covered with a noise shield 70 with a specified gap. The inside surface of the noise shield 70 is provided with a sound absorbing member 71 (see Fig **6**).

Here, the outside case 50 is in an elliptic bowl shape in side view, enclosing almost entire V-belt mechanism, and having a peripheral wall 50b and an outside wall 50a. The inside case 61 is in a shallow dish shape, closing the opening, directed inward in the vehicle width direction, of the outside case 50. While only a small clearance is present between the right case 2b and the front end of the inside case 61, a relatively large clearance (d) is produced between the right case 2b and the rear end of the inside case 61 by making the right case 2b recede inward in the vehicle width direction (see Fig **7**).

The front part of the inside case 61 is formed with a front opening 61 a of a diameter capable of exposing the crankshaft support boss portion 2d of the right case 2b. A seal plate 64 in an annular shape is held between the front opening 61 a and the support boss portion 2d. A seal member 64a is placed at the periphery of the seal plate 64 to seal the gap between the front opening 61 a and the support boss portion 2d. An oil seal 64b is placed at the inside circumferential edge of the seal plate 64 to seal the gap between the support boss portion 2d and the crankshaft 7.

The rear part of the inside case 61 is formed with a rear opening 61 b for admitting part of the driven pulley 43 where the urging spring 58 is attached. The rear opening 61 b is made in a large diameter so that an air passage is present around the urging spring 58. A cup portion 66a of the joint 66 of a cooling air introduction passage 65 is placed and held between the rear part of the inside case 61 and the right case 2b so as to fill the clearance (d). The end surface of the opening 66b of the cup portion 66a is fitted to and supported with the support boss portion 61 c formed on the reverse side of the inside case 61. The back side of the cup portion 66a contacts through a seal member 66c the right side surface of the right case 2b.

The air introduction passage 65 is constituted with the rubber-made joint 66 with its joint portion 66d connected to a plastic-made cooling air cleaner 68 through a rubber-made joint duct 67. The joint portion 66d is formed on the upper brim of the cup portion 66a, to which is fitted the downstream end 67a of the joint duct 67 and secured with a tightening band 67b. The joint duct 67 is located above the crankcase 2 and extends across the space between a fuel tank 138 and a helmet or article compartment 122, in rectangular shape in cross section cut in the direction normal to the axis, with the longer side of the rectangle in the longitudinal direction of the vehicle and the shorter side in the vertical direction.

A cylindrical case main part 68a of the cooling air cleaner 68 is fit-connected to the upstream end of the joint duct 67. A half-cylindrical filter element 68b is placed to cover the upstream end opening of the case main part 68a. The outside of the filter element 68b is covered with a cleaner cap portion 69a formed integrally with the vehicle body cover 69.

Part of the outside wall 50a, covering the driven pulley 43, of the outside case 50 is made to form an integral, duct-shaped, downward-extending rear air outlet 50c. The noise shield 70 is formed integrally with a rear discharge portion 70a for discharging cooling air coming out of the rear air outlet 50c to the underside of the belt case 45.

The front end face of the peripheral wall 50b of the outside case 50, together with the inside case 61, forms a downward-extending, cylindrical front air outlet 50d. Part of the outside wall 50a covering the drive pulley 42 is formed with a front side air outlet 50e, so that cooling air coming out of the front side air outlet 50e flows between the outside wall 50a and the noise shield 70, and is discharged from a discharge portion 70b formed below them.

When the main shaft 9 rotates, cooling air is drawn with the blower vanes 56g to flow from the cooling air cleaner 68, through the joint duct 67 and the joint 66, to the driven pulley 43 placing chamber of the belt case 45, with part of the cooling air, after cooling the driven pulley 43, discharged from the rear air outlet 50c. Remaining part of the cooling air is drawn to the drive pulley 42 placing chamber and discharged from the front face air outlet 50d, the front side air outlet 50e, and the front discharge portion 70b.

In this embodiment, since the belt case 45 is made completely separate from the crankcase 2, transmission of heat generated with the engine to the inside of the belt case 45 is reduced, temperature rise in the belt case is restricted and therefore the service life of the V-belt is extended. Another effect is the reduced emission of noise to outside because the belt case 45 shuts off engine noise.

Still another effect is that, since the clearance (d) is made between the belt case 45 and the side wall of the crankcase 2 and cooling air is caused to flow into the belt case 45, the crankcase 2 itself is cooled with the cooling air.

Another advantage is that, since the cooling air cleaner 68 is placed on the left side of the vehicle body and air is made to flow from the air cleaner toward the right side of the vehicle body through the joint duct 67, the space for placing the cooling air cleaner 68 can be provided easily and securely. In this case, since the joint duct 67 is placed between the fuel tank 138 placed on the front side and an articles compartment 139 where it is easy to place, cooling air can be drawn from the cooling air cleaner located on the left side of the vehicle body to the belt case 45 on the right side without duct layout problems. Another advantage is that, since the lid member (cleaner cap portion) 69a formed on the vehicle body cover 69 is also used as the lid member of the cooling air cleaner 68, the space for the cooling air cleaner 68 is saved, which also facilitates securing the layout space.

While this embodiment is arranged that the cooling air is supplied from the space between the belt case 45 and the right case 2b into the belt case 45 and is discharged from the rear air outlet 50c, it is also possible to arrange in a different way to supply cooling air from outside the belt case 45 and discharge from between the belt case 45 and the right case 2b. In this way, cooling property is improved by directing cooling air of a lower temperature to the belt.

Next, an automatic centrifugal clutch mechanism 10 is described.

The automatic centrifugal clutch mechanism 10 is attached to the left end portion of the main shaft 9. To put it roughly, the automatic centrifugal clutch mechanism 10 is constituted with a bowl-shaped outer clutch member (input housing) 72 having a bottom wall portion 72a and a peripheral wall portion 72b and spline-fitted to the main shaft 9 to be rotated together, a cylindrical inner clutch member (output housing) 73 having a cylindrical portion 73a and a hub portion 73b and placed coaxially in the outer clutch member 72, and a cylindrical output shaft 74 spline connected to the axial center of the hub portion 73b of the inner clutch member 73 to be rotated together, with the output shaft 74 supported through bearings 57d and 57e for free rotation on the main shaft 9. An output gear 57f is provided to engage with an intermediate large gear 15a of an intermediate shaft 15 (see Fig. 1, 2 and **8**).

Five outer clutch plates 75 are placed in the outer clutch member 72. Pressing plates 75a and 75b are placed on both sides of the plates 75, and they are engage-secured to the outer clutch member 72 to be rotated together. Inner clutch plates 76, six in number, are placed among the outer clutch plates 75 and pressing plates 75a, 75b, and engage-secured to the cylindrical surface of the inner clutch member 73 to be rotated together. Urging plate springs 77 are placed among the outer clutch plates 75 for preventing them from sticking to each other by widening gaps among them.

A cam surface 72c is formed on the inside surface of the bottom wall portion 72a of the outer clutch member 72. Steel ball weights 78 are placed between the cam surface 72c and the pressing plate 75a. As the weights 78 move with centrifugal forces radially outward of the clutch mechanism, they move along the cam surface 72c to the right (clutch engagement direction) to press and move the pressing plate 75a and to set the clutch mechanism to the engaged state.

Here, the cam surface 72c has a drive surface 72d and an escape surface 72e; the former for guiding the weights 78 to move in the direction of forcing the outer clutch plates 75 and the inner clutch plates 76 into contact with each other when the centrifugal force increases, and the latter for releasing the pressing contact of both clutch plates 75, 76 as the centrifugal force decreases. The drive surface 72d is set to an angle θ1 relative to the line (e) which is normal to the clutch axis. The escape surface 72e is made to continue from the drive surface 72d radially inward and set to an angle θ2, greater than θ1, relative to the line (e).

The central part 9c of the main shaft 9 is supported through a bearing 57a on the main boss portion 2e of the right case 2b. The right end portion of the main shaft 9 is supported with the boss portion 50d of the outside case 50 of the belt case 45. The left end portion 9b of the main shaft 9 is supported through a bearing 57c with a boss portion 108b formed in the center of the rear wall 108a of an oil chamber inside half 108. As described later, the oil chamber inside half 108 is secured with bolts to an oil chamber outside half 36c of a left case cover 36 to form an oil storage chamber 107.

The left end portion 9b of the main shaft 9 is provided with an oil passage 9d which is open to an oil introduction hole 108c bored in the oil chamber inside half 108. Branch holes 9e and 9f are made to extend radially outward from the middle of the oil passage 9d. The former branch hole 9e communicates with a space surrounded with the outer and inner clutch members 72, 73 through an oil hole 72g cut-formed in the fore-end portion of the boss portion 72f of the clutch outer member 72 to supply oil among the outer and inner clutch plates 75 and 76. The latter branch hole 9f communicates with a space between the main shaft 9 and the output shaft 74 to supply lubricant oil to the bearings 57d and 57e.

With the clutch mechanism 10 of this embodiment, the weight 78 move radially outward with centrifugal forces as the engine revolution increases and their positions in the axial direction are determined with the cam surface 72c. When the engine revolution exceeds a specified value, the weights 78 moving along the drive surface 72d press and move the pressing plate 75a to the right and cause the outer and inner clutch plates 75, 76 to come into contact with each other. As a result, rotation of the engine is transmitted from the main shaft 9 to the output shaft 74 to drive and rotate the rear wheel through a chain type of transmitting mechanism 12.

As the engine revolution decreases, the weights 78 move radially inward. When the engine revolution decreases below a specified value, the weights 78 are permitted to move left from the escape surface 72e, the pressing force on the pressing plate is released, relative rotation occurs between the outer and inner clutch plates 75 and 76, and the engine rotation is not transmitted from the main shaft 9 to the output shaft 74.

This embodiment is arranged that the tilt angle θ2 of the escape surface 72e is set to be greater than θ1. Therefore, the permitted amount of movement of the weights 78 to the left when the engine rotation is not transmitted is greater by L than in the case of setting the tilt angle θ2 of the escape surface 72e the same as the tilt angle θ1 of the drive surface 72d. This permits the urging plate springs 77 to produce sufficient clearances among the outer and inner clutch plates 75 and 76. As a result, drag due to adhesion of both clutch plates 75 and 76 is eliminated, so that moving the vehicle when the engine is not operating is made easily.

Next, the power transmission device for transmitting engine power to the rear wheel is described.

The power transmission device has a chain type of transmission mechanism 12 of an oil bath type contained in a transmission case 79 made of aluminium alloy in an elongate circular shape as seen in side view. The transmission case 79 is of a right-left, two-piece split type made up of an outside case 81 and an inside case 82. The two cases, with a sealing gasket 99 interposed between them, are positioned with dowels, and separably joined together using bolts 79a. The transmission case 79 also serves as a left arm main part of a rear arm for supporting the rear wheel 136 for free vertical swinging relative to the vehicle body.

The transmission case 79 and the right side arm main part 80 are joined together at their front parts to be roughly in a gate shape as seen in plan view. To describe it more in detail, the connection bracket extending from the front part of the inside case 82 inward in the vehicle width direction and the bracket 80a extending from the right side arm main part 80 inward in the vehicle width direction are joined together by means of bolts.

The front end of the inside case 82 is rotatably supported through a bearing 84a on the left end of a pivot cylinder 83. The right end of the pivot cylinder 83 is secured with bolts to a pivot support portion 2f formed on the rear end of the left case 2a of the crankcase 2. A pivot shaft 80b is raise-formed on the inside surface of the front end portion of the right side arm main part 80 coaxially with the pivot cylinder 83. The pivot shaft 80b is rotatably supported through a bearing 84b with a pivot support portion 2g formed at the rear end of the right case 2b. As described above, the transmission case 79 and the right side arm main part 80 swing up and down as a single rear arm.

The chain type of transmission mechanism 12 is constituted that; a drive sprocket 85 spline-fitted to the left end of the drive shaft 11 is connected through a primary chain 88 to an intermediate driven sprocket 87 spline-fitted to an intermediate shaft 86 placed in the transmission case 79, and an intermediate drive sprocket 89 spline-fitted to the intermediate shaft 86 is connected through a secondary chain 93 to a driven sprocket 92 connected to the hub 91 of the rear wheel 136.

The primary chain 88 is smaller in width than the secondary chain 93. The secondary chain 93 is placed outer side in the vehicle width direction than the primary chain 88.

The right side portion of the drive shaft 11 is supported for rotation through bearings 84c on the left and right cases 2a and 2b. The boss portion 85a of the drive sprocket 85 attached to the left end of the drive shaft 11 is supported for rotation through a bearing 84d on the fore-end boss portion 81 a of the outside case 81. The left and right end portions of the intermediate shaft 86 are supported for rotation through bearings 86a and 86b on the intermediate boss portions 81 b and 82b of the outside and inside cases 81 and 82.

A cylindrical member 92a is formed integrally with the axial centra! part of the driven sprocket 92. Part of the cylindrical member 92a located to the left of the driven sprocket 92 is supported for rotation through an outside bearing 94a on a rear end boss portion 81c integrally raise-formed with the rear inside surface of the outside case 81. The right side portion of the cylindrical member 92a is supported for rotation through an inside bearing 94b on a rear end boss portion 82c integrally raise-formed with the rear inside surface of the inside case 82.

Here, the inside fore-end portion of the rear end boss portion 81 c of the outside case 81 is inserted in a recess 92b formed in the left side surface of the driven sprocket 92. Therefore, the outside bearing 94a is located in the driven sprocket 92. As a result, extending amount of the rear end bearing portion in the vehicle width direction is restricted, and the overall dimension of the transmission device in the vehicle width direction is prevented from increasing.

The inside bearing 94b is located on the extended line of the primary chain 88. That is, as the primary chain 88 is placed inside the secondary chain 93, a space is present behind the primary chain 88 and outside the rear wheel, and the space is utilized to place the inside bearing 94b. This arrangement also prevents the transmission device from expanding in the vehicle width dimension.

The right end portion of the cylindrical member 92a is spline-connected to the inside cylindrical surface of a cylindrical connection boss portion 95a of a cover plate 95 bolt-secured to the left end surface of the hub 91. The left side portion of the rear wheel shaft 90 is coaxially inserted into the cylindrical member 92a, and the left end portion 90a of the rear wheel shaft 90 projects in the vehicle width direction from the rear end boss portion 81 c of the outside case 81. The projecting portion is secured with a nut 97 through collars 96a to 96c interposed between the nut and a bearing 94c. As a result, the axial position of the rear wheel 13 is determined relative to the outside case 81 of the transmission case 79. Here, the symbol 91 a denotes a break disk of the rear wheel break.

As described above, this embodiment is arranged that the right end portion of the rear wheel shaft 90 is supported with the right side arm main part 80, the left end portion of the rear wheel shaft 90 is made to project from the outside case 81, and the nut 97 is screwed to the projecting portion, so that the left end portion of the rear wheel shaft 90 is supported. As a result, the rear wheel shaft 90 is supported with a wide span with improved support strength.

Since the cylindrical member 92a disposed outside the rear wheel shaft 90 is supported with the inside bearing 94b placed in the inside case 82 and the outside bearing 94 placed in the outside case 81, the cylindrical member 92a is supported with a wide span with improved support strength.

As described above, since the primary chain 88 is smaller in width than the secondary chain 93 and the secondary chain 93 is placed outer than the primary chain 88 in the vehicle width direction, the vehicle width, especially in the front part of the transmission case 79, is prevented from increasing while widening the span of supporting the cylindrical member 92a.

A breather chamber 98 is formed in the transmission case 79 so as to be located within the track of the secondary chain 93. The breather chamber 98 has a lower right chamber r1, a lower left chamber r2, and an upper chamber r3. These chambers r1, r2, and r3 are formed that upper and lower void chambers of rectangular parallelepiped shape are formed with a rectangular peripheral wall 98a and a central partition wall 98b, and the lower void chamber is divided into right and left chambers with the partition wall portion 99a of the gasket 99. The upper left and right chambers are interconnected through an opening 99b bored in the partition wall portion 99a. FIGs. **19** and **20** are views of the inside case 82 and the outside case 81 as seen from the mating plane side.

Part of the side wall 81d of the outside cover 81 constituting the breather chamber 98 is connected to a discharge joint 100. A discharge hose 101 connected to the discharge joint 100 extends rearward along the external surface of the side wall 81 d, curves in an arcuate shape down forward behind the rear wheel securing nut 97, further extends forward, and rises up in front of the discharge joint 100. A lubricant oil filler inlet 81 e is formed in the vicinity of the rear wall of the breather chamber 98 of the outside case 81. An oil cap 102 having an oil gauge stick 102a is screw-fitted into the inlet 81 e.

The air in the transmission case, stirred by the rotating gears and running chains, contains oil mist. The air containing oil mist flows from the introduction hole 98c formed in the bottom wall of the lower right chamber r1, through the right-left connection hole 99b made in the partition wall 99a of the gasket 99, enters the lower left chamber r2, and through the over-under connection hole 98d formed in the partition wall 98b to the upper chamber r3. The oil mist contained in the air adheres to wall surfaces as the air flows through the breather chamber 98, and air free from the oil mist is discharged outside through the discharge hose 101.

A case cover 103 is removably attached and secured to the side wall 81 d of the outside case 81 using bolts 104a. The case cover 103 is of an elongate circular shape (elliptic) in side view and of a size sufficient to cover the discharge joint 100, the discharge hose 101, the oil cap 102, and the nut 97 fitting area of the rear wheel shaft 90, and to its inside surface is applied a sound absorbing material 105. The symbol 106 denotes a drain bolt, screwed into the bottom wall of the transmission case 79, for discharging lubricant oil in the transmission case 79.

Since this embodiment is arranged that the breather chamber 98 is located in the track of the secondary chain 93, a void space is effectively utilized. Since the discharge hose 101, the oil cap 102, and the nut 97 fitting area of the rear wheel shaft 90 are covered with the case cover 103, external appearance is prevented from becoming poor and noise is restricted from being emitted outside.

As shown in FIG. 2, the drive shaft 11, the intermediate shaft 86, the rear wheel shaft 90, and the intermediate shaft 15 on the engine side are arranged on a straight line, and the main shaft 9 of the V-belt type of transmission mechanism is located with an upward displacement from the above-mentioned straight line. Corresponding to the amount of the upward displacement of the main shaft 9 as described above, the intermediate shaft 15 and the entire V-belt type of transmission mechanism can be located with a forward displacement. As a result, the entire transmission device can be reduced in its front-to-rear dimension.

Since this embodiment is arranged that the dry V-belt type of transmission mechanism 8 using a V-belt is placed on the right side of the crankcase 2 and the oil bath type of chain-driven transmission mechanism 12 is placed in the left rear position, the dry type of V-belt is prevented from being soiled with lubricant oil in the oil bath.

Next, the cooling water system is described.

The cooling water system of the engine of this embodiment consists of a main route for cooling the engine, an oil cooler route for supplying cooling water to the oil cooler 114g. and a carburetor 24 route for preventing the carburetor from freezing. With the main route, the cooling water pump 110 draws cooling water from the secondary side header 117c of a radiator 117 through a return hose 118, pressurizes the cooling water and supplies it through a supply hose 119 to an engine water supply port 2h of the left case 2a. The water supplied is further supplied through cooling jackets in the cylinder block and cylinder head, from an engine water drain port 2i to a thermostat valve 120, and a connection hose 121, to a primary side header 117b of the radiator 117.

With the oil cooler route, cooling water is supplied through a cooler water supply hose 123a branched from the vicinity of the engine water supply port 2h of the supply hose 119 to the oil cooler 114g. The cooling water coming out of the oil cooler 114g is returned to the primary side header 117b of the radiator 117 through the a cooler return hose 123b.

With the carburetor route, cooling water in the engine is taken out from an upstream side of the valve member of the thermostat valve 120 and supplied to the jacket of a carburetor 24 through a carburetor primary side hose 124a. The cooling water after flowing through the carburetor 24 returns to the primary side header 117b of the radiator 117 through a carburetor secondary side hose 124b.

Here, the symbol 125c stands for an air vent hose for removing air remaining in the region from the cooling water pump 110 to the supply hose 119, and the symbol 125b stands for another air vent hose for removing air remaining in the engine. The symbols 127 stands for a replenishment water cap attached to a vehicle body cover support frame 125d located in front of the head pipe 125a. The replenishment water cap 127 is connected to the primary side header 117b of the radiator 117 through a replenishment water hose 122.

As described above, the cooling water pump 110 is placed on the side (left in the vehicle width direction) opposite the V-belt type of CVT 8 which is dry type and must be protected against water. Therefore, the problem of water entry, due to the layout position of the cooling water pump 110, into the dry type of belt case 45 is avoided.

Placing the cooling water pump 110 on the opposite side of the belt case is made that the cooling water pump 110 is placed behind the flywheel magneto housing portion 36c for housing the flywheel magneto 41 projecting in the vehicle width direction of the case cover 36. As a result, the flywheel magneto housing portion 36c serves as a protecting member for protecting the cooling water pump 110 from oncoming flying gravel or the like.

Since the cooling water pump 110 is placed in a relatively recessed position between the flywheel magneto housing portion 36c of the case cover 36 and the oil storage chamber 107 located axially outer side of the clutch mechanism 10, otherwise unused space is utilized.

As described above, the engine 1 is placed in the foot board 144, the radiator 117 is placed inside front end of the foot board 144, and the radiator 117 and the cooling water pump 110 are interconnected through the return hose 118 routed under the foot board 144, otherwise unused space is utilized for laying cooling water piping.

To roughly describe the radiator 117, it comprises a core section 117a curved like an arcuate plate, with its right end provided with a primary side header 117b, with its left end provided with the secondary side header 117c, and with its back side provided with a blower 117d. The blower 117d has an outside diameter that is greater than the height of the core section 117a and is placed to project upward beyond the upper edge of the core section 117a. Therefore, this embodiment is arranged to provide a cover 117e (the hatched area in FIG. **23**) for covering the projecting portion. As a result, all the cooling air drawn with the blower 117d passes the core section 117a, the blower efficiency is prevented from lowering.

The blower 117d is connected to a breather pipe 117f. The breather pipe 117f is extended once upward from the position of connection with the blower 117d and then bent rear downward. This prevents water splashed up with wheels or rain water from finding its way into the breather pipe 117f.

The radiator 117 is formed in an arcuate shape as described above and moreover it is tilted rearward from the vertical. As a result, the primary and secondary headers 117b and 117c located on the outer sides in the vehicle width direction are located higher than the central part from the ground. As a result, a greater bank angle θ can be secured than in an arrangement in which the radiator is placed upright (See FIG. **23**)

Since the radiator 117 is curved upward due to the layout described above, air may collect in the header portions. In this embodiment, however, since the header portion is connected to the replenishment water cap through the air vent pipe 124c, the air can be discharged. Since the air vent pipe 124c is routed in the foot board 144, no problem arises in terms of layout space.

Next, a further embodiment of a scooter-type motorcycle is described. Said further embodiment is basically comparable with the embodiment described above. Thus, features which are not described in detail with said further embodiment are considered to be identical or comparable with the respective features of the first mentioned embodiment. Furthermore, several elements of the further embodiment are identical or comparable with respective elements of the first mentioned embodiment even if different reference signs are used.

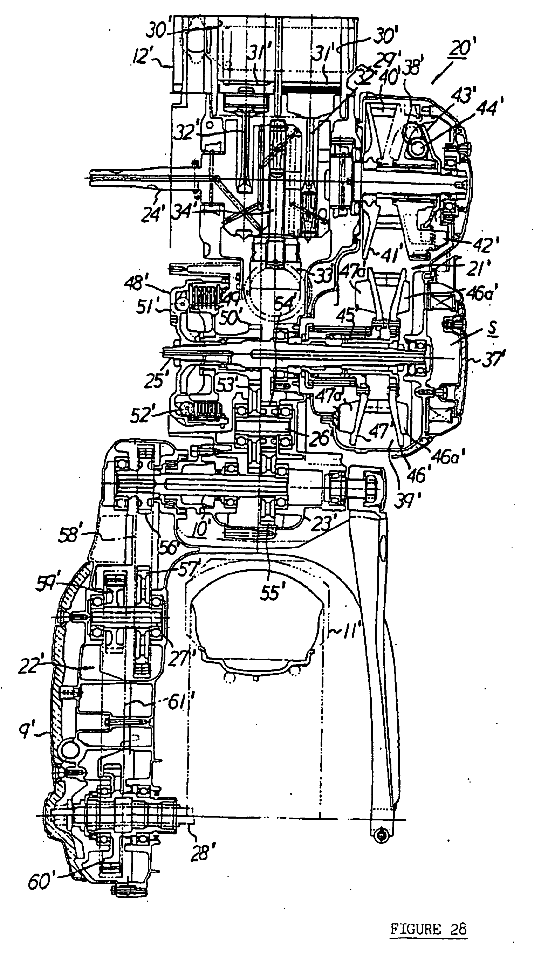

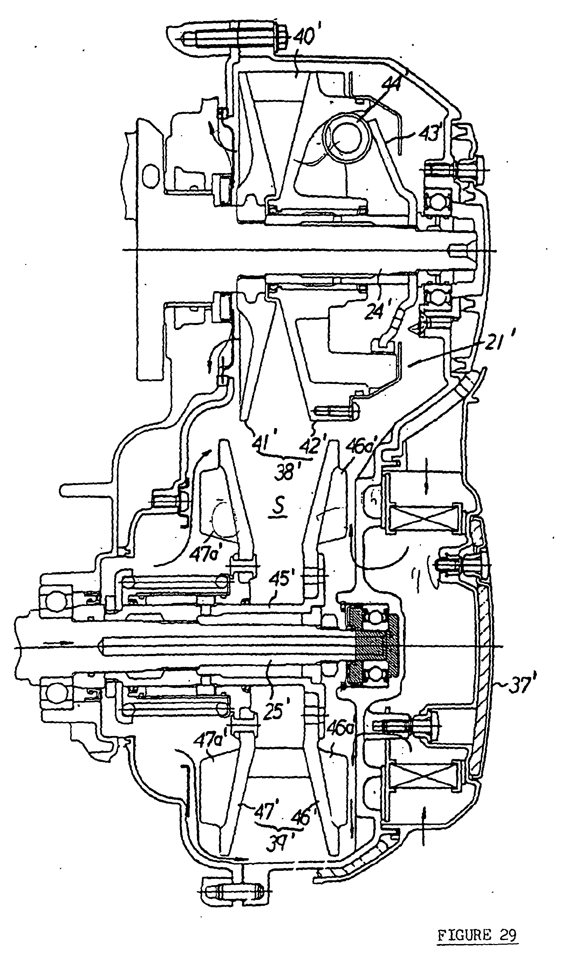

As shown in Fig. **26**, a scooter-type motorcycle 1' according to the further embodiment has a vehicle body including a head pipe 2' (see Fig. **27**) located at an upper front part thereof, through which a steering shaft (not shown) rotatably extends. A handle 3' is attached to the upper end of the steering shaft, and a front fork 4 is secured to the lower end thereof. A front wheel 5' that is a steering wheel is rotatably supported at the lower end of the front fork 4.

In the rear of the handle 3', a main seat 6' and a tandem seat 7' are disposed in tandem. On the right and left sides between the handle 3' and the main seat 6', low floor foot steps 8' are provided.

In a rear part of the vehicle body, a rear arm 9' is pivoted at the front end by a pivot shaft 10' for vertical swinging movement. A rear wheel 11' that is a driving wheel is rotatably supported at the rear end of the rear arm 9'.

As shown in Fig. 27 34, an engine 12' as a driving source is disposed diagonally below the head pipe 2'. A air cleaner 13' is disposed in front of the head pipe 2'.

From a rear part of the air cleaner 13', right and left air intake ducts 14' extends downward and each air intake duct 14' is connected to an opening formed at an end of an air intake silencer 15'. The air intake silencer 15' and a carburetor 16' disposed downstream thereof (downstream in the flowing direction of fresh air, namely, to the rear of the vehicle body) are connected by a rubber joint 17'. The carburetor 16' is connected to an air intake system or device of the engine 12' by an air intake tube 18'. In Fig. 34, designated as 19' is a breather pipe, through which EGR gas generated in the engine 12' is returned to the air cleaner 13'.

Next, the constitution of an engine unit 20' will be described with reference to Fig. **28**.

The engine unit 20' shown in Fig. 28 35 is constituted as a unit including the engine 12', a V-belt type automatic transmission 21', and a reduction mechanism 22'. In a transmission case 23', a crankshaft 24' of the engine 12', a driven shaft 25', a middle shaft 26', and the pivot shaft 10' are disposed from front side of the vehicle body in parallel with each other.

The reduction mechanism 22' is accommodated in a left side part of the rear arm 9', where a middle shaft 27' and an output shaft 28' are longitudinally disposed in parallel with each other. The output shaft 28' has a portion protruded into the inside of the rear arm 9', to which the rear wheel 11' is attached.

The engine 12' is a four-cycle, two-cylinder engine having a cylinder body in which two cylinders 30' are disposed side by side. In each cylinder, a piston 31' is slidably fitted, and the pistons 31' slide therein with the same phase. Each piston 31' is connected to the crankshaft 24' via a connecting rod 32' so that the reciprocating motion of the pistons 31' in the cylinders 30' is converted into rotational motion of the crankshaft 24' by the connecting rod 32'.

The engine 12' is provided with a balancer mechanism, which is composed of a balancing piston 33' and a connecting rod 34' disposed on the other side of the pistons 31' with respect to the crankshaft 24' and balanced with the pistons 31' and the connecting rods 34' in weight.

On the right side of the transmission case 23', a belt case 37' which is dividable laterally into tow parts is attached, and the V-belt type automatic transmission 21' is accommodated in a belt chamber S in the belt case 37'.

The V-belt type automatic transmission 21' comprises a driving pulley 38' provided on one end of the crankshaft 24', a driven pulley 39' provided on one end portion (overhang portion) of the driven shaft 25', and a endless V-belt 40' entrained between the pulleys.

The driving pulley 38' comprises a fixed sheave 41' fixed on the crankshaft 24' and a movable sheave movably supported thereon. A plurality of centrifugal weights 44' are disposed movably in the diameter direction between the movable sheave 42' and a cam plate 43' fixed on the crankshaft 24'.

A hollow shaft 45' is rotatably journaled around the overhang portion of the driven shaft 25'. The driven pulley 39' is composed of a fixed sheave 46' fixed on the hollow shaft 45' and a movable sheave 47' movably supported thereon. On an outer surface of the fixed sheave 46' and the movable sheave 47' constituting the driven pulley 39' are integrally formed a plurality of fins 46a' and 47a', respectively, and each of the fixed sheave 46' on which the fins 46a' are formed and the movable sheave on which the fins 47a' are formed forms a centrifugal cooling fan.

On the other end of the driven shaft 25', a centrifugal clutch 48' is provided, and to a clutch inner 49' of the centrifugal clutch 48' is connected a gear 50' which rotates together therewith. Incidentally, the centrifugal clutch 48' includes the clutch inner 49', a drum-shaped clutch outer 51' covering the clutch inner 49', and a centrifugal weight 52'.

Large and small diameter gears 53' and 54' are attached to the middle shaft 26'. The large-diameter gear 53' is in meshing engagement with the gear 50', and the small-diameter gear 54' is in meshing engagement with a gear 55' secured to the pivot shaft 10'.

The pivot shaft 10' has an end part to which a sprocket 56' is attached, and an endless chain 58' is entrained between the sprocket 56' and a large-diameter sprocket 57' attached to the middle shaft 27'. An endless chain 61' is entrained between a small-diameter sprocket 59' attached to the middle shaft 27' and a sprocket 60' attached to the output shaft 28'. The before-mentioned reduction mechanism 22' comprises the sprockets 56' and 57', the chain 58' entrained therebetween, the sprockets 59' and 60', and the chain 61' entrained therebetween.

When the engine 12' is started and the crankshaft 24' is rotationally driven, the rotational motion thereof is transmitted to the driven shaft 25' with its speed being automatically changed by the belt type automatic transmission 21'. However, when the rotational speed of the driven shaft 25' is a predetermined value or lower, the centrifugal clutch 48' is maintained in an off-state and thus the rotational motion of the driven shaft 25' is not transmitted to the middle shaft 26'.

Thereafter, when the rotational speed of the driven shaft 25' increases over the predetermined value, the centrifugal clutch 48' is turned to an on-state so that the rotational motion of the driven shaft 25' is transmitted to the middle shaft 26' via the gears 50' and 53'. The rotational motion of the middle shaft 26' is in turn transmitted to the output shaft 28' via gears 54' and 55' and the pivot shaft 10' with its speed reduced by the reduction mechanism 22' so that the output shaft 28' and the rear wheel 11' secured thereto are rotationally driven to run the scooter-type motorcycle 1' shown in Fig. **26**.

In the above embodiment, on an outer surface of the fixed sheave 46' and the movable sheave 47' constituting the driven pulley 39' are integrally formed a plurality of fins 46a' and 47a', respectively, to form the fixed sheave 46' and the movable sheave 47' into cooling fans. Thus, outside air can be introduced into the belt chamber from both inner and outer sides thereof by the cooling fans as shown by the arrows in Fig. 29 36. As described above, according to the embodiment, a sufficient amount of outside air can be introduced into the belt chamber S from both inner and outer sides thereof by the two cooling fans so that the every part in the belt chamber S can be cooled effectively with the sufficient outside air, whereby the temperature in the belt chamber can be prevented from rising.

In the above embodiment, the fins 46a' and 47a' are formed on the fixed sheave 46' and the movable sheave 47', respectively, of the driven pulley 39' to form these into cooling fans. However, even when similar fins are formed on the fixed sheave 46' of the driven pulley 39' and the movable sheave 42' of the driving pulley 38', or the fixed sheave 46' and the movable sheave 47' of the driven pulley 39' and the movable sheave 42' of the driving pulley 38' to form these into cooling fans, a similar effect can be obtained.

As is clear from the above description, according to the embodiment, in a motorcycle having a belt chamber accommodating an automatic transmission comprising a driving pulley provided on a crankshaft of an engine, a driven pulley provided on a driven shaft disposed in parallel with the crankshaft, and an endless belt entrained between the pulleys, a plurality of fins are formed on an outer surface of a fixed sheave of the driven pulley and on at least one of a movable sheave of the driven pulley and a movable sheave of the driving pulley to form a plurality of cooling fans by which outside air is introduced into the belt chamber from both inner and outer sides thereof so that a sufficient amount of outside air to cool every part therein can be introduced thereinto. Thereby, an effect of preventing a rise in temperature in the belt chamber can be obtained.

Since a plurality of fins are formed on an outer surface of the fixed sheave of the driving pulley and on at least one of the movable sheave of the driven pulley and the movable sheave of the driving pulley to form a plurality of cooling fans by which outside air is introduced into the belt chamber from both inner and outer sides thereof, a sufficient amount of outside air can be introduced into the belt chamber to cool every part therein, whereby the temperature in the belt chamber can be prevented from rising.

According to the embodiments described above, a cooling system for motorcycles with a V-belt type of CVT placed on the side of a crankcase is provided. A belt case for housing the speed changing mechanism of the V-belt type of CVT is formed separately from the crankcase so as to produce clearance between the crankcase and the belt case and that cooling air is supplied into the belt case.

Since the belt case for housing the speed changing mechanism of the V-belt type of CVT is formed separately from the crankcase so as to produce clearance between the crankcase and the belt case, heat of the engine is less likely to be transmitted to the belt case. Therefore, temperature rise in the belt case due to the heat of the engine is restricted, sufficient cooling performance is obtained with the air supply only with the blower vanes, and the durability of the V-belt is improved.

Cooling air is drawn through the clearance into the belt case and the air which has cooled the speed changing mechanism in the belt case is discharged through an air outlet formed on the outer side in the vehicle width direction of the belt case.

Since cooling air is drawn through the clearance into the belt case, and is discharged from the air outlet formed on the outside in the vehicle width direction of the belt case, an effect of cooling the crankcase side is obtained as the cooling air flows through the clearance, and the temperature of the engine, especially that of lubricant oil is maintained at an appropriate value.

Cooling air is drawn into the belt case through an air inlet formed on the outer side in the vehicle width direction of the belt case and the air which has cooled the speed changing mechanism in the belt case is discharged through the clearance.

Since cooling air is drawn into the belt case through an air inlet formed on the outer side in the vehicle width direction of the belt case and is discharged through the clearance, cooling air of low temperatures may be drawn into the belt case to improve the cooling property inside the belt case.

The embodiments described above are teaching a motorcycle, especially a scooter type motorcycle with an engine having a crankcase and a transmission having a transmission case, said crankcase and said transmission case are separated from each other, wherein a clearance is provided between said crankcase and said transmission case.

Furthermore, an air cooling means for cooling said transmission is provided, wherein cooling air is routed through said transmission case and said clearance. Cooling air is drawn through the clearance into the transmission case and air which has cooled the transmission is discharged through an air outlet formed on an outer side in a motorcycle width direction of the transmission case and/or cooling air is drawn into the transmission case through an air inlet formed on an outer side in the motorcycle width direction of the belt case and air which has cooled the transmission is discharged through the clearance.

The transmission according to the embodiments is a V-belt type constantly variable transmission and said transmission case is a belt case for housing a speed changing device of the V-belt type.

The embodiments mentioned above are teaching a motorcycle, especially a scooter type motorcycle, with a V-belt type constantly variable transmission and a belt case for housing a speed changing device of the V-belt type. Said speed changing device of the V-belt type comprises a drive pulley with a stationary pulley half and a moveable pulley half, and a driven pulley with a stationary pulley half and a moveable pulley half. An endless V-belt is entrained between said drive and driven pulley, wherein a plurality of air cooling vanes is provided on at least one of said pulley halves.

Said air cooling vanes are provided on at least one of the pulley halves of the driven pulley. Said air cooling vanes are provided on at least one of the moveable pulley halves.

A cooling air introduction means is provided on a driven pulley side of said belt case. A cooling air discharge means is provided on a drive pulley side of said belt case. Said air cooling means comprises a cooling air cleaner means.

## Claims

1. Engine, in particular for a motorcycle, having a crankcase (2) and a belt-type transmission with a driving shaft and a driven shaft in a transmission case (45, 37'), said crankcase (2) and said transmission case (45, 37') being separated from each other, wherein a clearance is provided between said crankcase (2) and said transmission case (45, 37'), such that a relatively small clearance is provided in the vicinity of the driving shaft, and a relatively large clearance (d) is provided in the vicinity of the driven shaft whereby cooling air is caused to flow into the transmission case (45, 37') via said relatively large clearance (d).

2. Engine according to claim 1, further comprising an air cooling means for cooling said transmission (8, 21'), wherein cooling air is routed through said transmission case (45, 37') and said large clearance (d).

3. Engine according to claim 2, wherein said air cooling means is configured to draw cooling air through the large clearance (d) into the transmission case (45, 37') and to discharge air which has cooled the transmission (8, 21') through an air outlet (70a, 70b) formed on an outer side of the transmission case (45, 37') with respect to the crankcase (2).

4. Engine according to claim 2 or 3, wherein said air cooling means is configured to draw cooling air into the transmission case (45, 37') through an air inlet formed on an outer side of the transmission case (45, 37') and to discharge air which has cooled the transmission (8, 21') through the large clearance (d).

5. Engine according to at least one of the claims 1 to 4, wherein said transmission (8, 21') is a V-belt type constantly variable transmission and said transmission case (45, 37') is a belt case for housing a speed changing device (42, 43, 44) of the V-belt type.

6. Engine according to claim 5, wherein said speed changing device of the V-belt type comprises a drive pulley (42, 38') with a stationary pulley half (42a, 41') and a moveable pulley half (42b, 42'), and a driven pulley (43, 39') with a stationary pulley half (55, 46') and a moveable pulley half (56, 47'), an endless V-belt (44, 40') entrained between said drive and driven pulley (42, 43; 38', 39'), wherein a plurality of air cooling vanes (46a', 47a', 56g) is provided on at least one of said pulley halves (42a, 42b, 55, 56).

7. Engine according to claim 6, wherein said air cooling vanes (46a', 47a', 56g) are provided on at least one of the pulley halves (42a, 42b, 55, 56; 41', 42', 46', 47') of the driven pulley (43, 39') and/or said drive pulley (42, 38').

8. Engine according to claim 6 or 7, wherein said air cooling vanes (46a', 47a', 56g) are provided on at least one of the moveable pulley halves (42b, 56; 42', 47') and/or of the fixed halves (42a, 55; 41', 46').

9. Engine according to at least one of the claims 1 to 8, wherein a cooling air introduction means is provided on a drive pulley side and/or on a driven pulley side of said transmission case (45, 37').

10. Engine according to at least one of the claims 2 to 8, wherein said air cooling means comprises a cooling air cleaner means (68).

11. Engine according to at least one of the claims 3 to 10, wherein said outlets (70a, 70b) are formed to be located in the area of the transmission case (45, 37') below the line interconnecting shafts of said drive and driven pulley (42, 38'; 43, 39').

12. Engine according to at least one of the claims 6 to 11, wherein said inlet is formed to be located above a shaft of the driven pulley (43, 39').

13. Engine according to at least one of the claims 6 to 12, wherein an air inlet is formed rearwardly of a shaft of the driven pulley (43, 39') at said transmission case (45, 37').

14. Engine according to at least one of the claims 6 to 13, wherein an air inlet is formed in an area between shafts of said drive pulley (42, 38') and said driven pulley (43, 39') at said transmission case (45, 37').

15. Engine according to at least one of the claims 6 to 14, wherein an air outlet is formed forwardly of a shaft of said drive pulley (42, 38') at said transmission case (45, 37').

16. Engine according to at least one of the claims 6 to 15, wherein an air outlet is formed in an area between shafts of said drive pulley (42, 38') and said driven pulley (43, 39') at said transmission case (45, 37').

## Patentansprüche

1. Motor, insbesondere für ein Motorrad, mit einem Kurbelgehäuse (2) und einem Riemengetriebe mit einer antreibenden Welle und einer angetriebenen Welle in einem Getriebegehäuse (45, 37'), wobei das Kurbelgehäuse (2) und das Getriebegehäuse (45, 37') voneinander getrennt sind und ein Abstand zwischen dem Kurbelgehäuse (2) und dem Getriebegehäuse (45, 37') so vorhanden ist, dass ein relativ kleiner Zwischenraum in der Nähe der antreibenden Welle vorhanden ist und ein relativ großer Zwischenraum (d) in der Nähe der angetriebenen Welle vorhanden ist, so dass bewirkt wird, dass Kühlluft über den relativ großen Zwischenraum (d) in das Getriebegehäuse (45, 37') strömt.

2. Motor nach Anspruch 1, der des Weiteren eine Luftkühleinrichtung zum Kühlen des Getriebes (8, 21') umfasst, wobei Kühlluft durch das Getriebegehäuse (35, 37') und den großen Zwischenraum (d) geleitet wird.

3. Motor nach Anspruch 2, wobei die Luftkühleinrichtung so aufgebaut ist, dass sie Kühlluft über den großen Zwischenraum (d) in das Getriebegehäuse (45, 37') saugt und Luft, die das Getriebe (8, 21') gekühlt hat, über einen Luftauslass (70a, 70b) ableitet, der an einer Außenseite des Getriebegehäuses (45, 37') in Bezug auf das Kurbelgehäuse (2) ausgebildet ist.

4. Motor nach Anspruch 2 oder 3, wobei die Luftkühleinrichtung so aufgebaut ist, dass sie Kühlluft in das Getriebegehäuse (45, 37') über einen Lufteinlass ansaugt, der an einer Außenseite des Getriebegehäuses (45, 37') ausgebildet ist, und Luft, die das Getriebe (8, 21') gekühlt hat, über den großen Zwischenraum (d) ableitet.

5. Motor nach wenigstens einem der Ansprüche 1 bis 4, wobei das Getriebe (8, 21') ein stufenloses Keilriemengetriebe ist und das Getriebegehäuse (45, 37') ein Riemengehäuse zum Aufnehmen einer Drehzahländerungsvorrichtung (42, 43, 44) des Keilriemen-Typs ist.

6. Motor nach Anspruch 5, wobei die Drehzahländerungsvorrichtung des Keilriemen-Typs eine Antriebs-Riemenscheibe (42, 38') mit einer stationären Riemenscheibenhälfte (42a, 41') und einer beweglichen Riemenscheibenhälfte (42b, 42') sowie eine angetriebene Riemenscheibe (43, 39') mit einer stationären Riemenscheibenhälfte (55, 46') und einer beweglichen Riemenscheibenhälfte (56, 47') sowie einen Endlos-Keilriemen (44, 40') umfasst, der zwischen der antreibenden und der angetriebenen Riemenscheibe (42, 43; 38', 39') läuft, wobei eine Vielzahl von Luftkühlrippen (46a', 47a', 56g) an wenigstens einer der Riemenscheibenhälften (42a, 42b, 55, 56) vorhanden ist.

7. Motor nach Anspruch 6, wobei die Luftkühlrippen (46a', 47a', 56g) an wenigstens einer der Riemenscheibenhälften (42a, 42b, 55, 56; 41', 42', 46', 47') der angetriebenen Riemenscheibe (43, 39') und/oder der antreibenden Riemenscheibe (42, 38') vorhanden sind.

8. Motor nach Anspruch 6 oder 7, wobei die Luftkühlrippen (46a', 47a', 56g) an wenigstens einer der beweglichen Riemenscheibenhälften (42b, 56; 42', 47') und/oder der stationären Hälften (42a, 55; 41', 46') vorhanden sind.

9. Motor nach wenigstens einem der Ansprüche 1 bis 8, wobei eine Kühlluft-Einleiteinrichtung an einer Seite der antreibenden Riemenscheibe und/oder einer Seite der angetriebenen Riemenscheibe des Getriebegehäuses (45, 37') vorhanden ist.

10. Motor nach wenigstens einem der Ansprüche 2 bis 8, wobei die Luftkühleinrichtung eine Kühlluft-Reinigungseinrichtung (68) umfasst.

11. Motor nach wenigstens einem der Ansprüche 3 bis 10, wobei die Auslasse (70a, 70b) so ausgebildet sind, dass sie sich in dem Bereich des Getriebegehäuses (45, 37') unterhalb der Linie befinden, die Wellen der antreibenden und der angetriebenen Riemenscheibe (42, 38', 43, 39') verbindet.

12. Motor nach wenigstens einem der Ansprüche 6 bis 11, wobei der Einlass so ausgebildet ist, dass er sich oberhalb einer Welle der angetriebenen Riemenscheibe (43, 39') befindet.

13. Motor nach wenigstens einem der Ansprüche 6 bis 12, wobei ein Lufteinlass hinter einer Welle der angetriebenen Riemenscheibe (43, 39') an dem Getriebegehäuse (45, 37') ausgebildet ist.

14. Motor nach wenigstens einem der Ansprüche 6 bis 13, wobei ein Lufteinlass in einem Bereich zwischen Wellen der antreibenden Riemenscheibe (42, 38') und der angetriebenen Riemenscheibe (43, 39') an dem Getriebegehäuse (45, 37') ausgebildet ist.

15. Motor nach wenigstens einem der Ansprüche 6 bis 14, wobei ein Luftauslass vor einer Welle der antreibenden Riemenscheibe (42, 38') an dem Getriebegehäuse (45, 37') ausgebildet ist.

16. Motor nach wenigstens einem der Ansprüche 6 bis 15, wobei ein Luftauslass in einem Bereich zwischen Wellen der antreibenden Riemenscheibe (42, 38') und der angetriebenen Riemenscheibe (43, 39') an dem Getriebegehäuse (45, 37') ausgebildet ist.

## Revendications

1. Moteur, en particulier pour un motocycle, ayant un carter (2) et une transmission de type courroie avec un arbre d'entraînement et un arbre entraîné dans un carter de boîte de vitesses (45, 37'), ledit carter (2) et ledit carter de boîte de vitesses (45, 37') étant séparés l'un de l'autre, dans lequel un espace est prévu entre ledit carter (2) et ledit carter de boîte de vitesses (45, 37'), de sorte qu'un espace relativement petit est disposé à proximité de l'arbre d'entraînement, et un espace relativement grand (d) est disposé à proximité de l'arbre entraîné de telle sorte que de l'air de refroidissement est amené à s'écouler dans le carter de boîte de vitesses (45, 37') par l'intermédiaire dudit espace relativement grand (d).

2. Moteur selon la revendication 1, comprenant de plus des moyens de refroidissement d'air pour refroidir ladite transmission (8, 21'), dans lequel de l'air de refroidissement est acheminé à travers ledit carter de boîte de vitesses (45, 37') et ledit grand espace (d).

3. Moteur selon la revendication 2, dans lequel lesdits moyens de refroidissement d'air sont configurés pour aspirer de l'air de refroidissement à travers le grand espace (d) dans le carter de boîte de vitesses (45, 37') et pour évacuer de l'air qui a refroidi la transmission (8, 21') à travers une sortie d'air (70a, 70b) formée sur un côté extérieur du carter de boîte de vitesses (45, 37') par rapport au carter (2).

4. Moteur selon la revendication 2 ou 3, dans lequel lesdits moyens de refroidissement d'air sont configurés pour aspirer de l'air de refroidissement dans le carter de boîte de vitesses (45, 37') à travers une entrée d'air formée sur un côté extérieur du carter de boîte de vitesses (45, 37') et pour évacuer de l'air qui a refroidi la transmission (8, 21') à travers le grand espace (d).

5. Moteur selon au moins l'une des revendications 1 à 4, dans lequel ladite transmission (8, 21') est une transmission constamment variable de type courroie trapézoïdale et ledit carter de boîte de vitesses (45, 37') est un carter de courroie servant à loger un dispositif de changement de vitesse (42, 43, 44) du type courroie trapézoïdale.

6. Moteur selon la revendication 5, dans lequel ledit dispositif de changement de vitesse du type courroie trapézoïdale comprend une poulie d'entraînement (42, 38') avec une moitié de poulie fixe (42a, 41') et une moitié de poulie mobile (42b, 42'), et une poulie entraînée (43, 39') avec une moitié de poulie fixe (55, 46') et une moitié de poulie mobile (56, 47'), une courroie trapézoïdale sans fin (44, 40') entraînée entre ladite poulie d'entraînement et ladite poulie entraînée (42, 43 ; 38', 39'), dans lequel une pluralité de palettes de refroidissement d'air (46a', 47a', 56g) est disposée sur au moins l'une desdites moitiés de poulie (42a, 42b, 55, 56).

7. Moteur selon la revendication 6, dans lequel lesdites palettes de refroidissement d'air (46a', 47a', 56g) sont disposées sur au moins l'une desdites moitiés de poulie (42a, 42b, 55, 56 ; 41', 42', 46', 47') de la poulie entraînée (43, 39') et/ou de ladite poulie d'entraînement (42, 38').

8. Moteur selon la revendication 6 ou 7, dans lequel lesdites palettes de refroidissement d'air (46a', 47a', 56g) sont disposées sur au moins l'une des moitiés de poulie mobiles (42b, 56 ; 42', 47') et/ou des moitiés de poulie fixes (42a, 55 ; 41', 46').

9. Moteur selon au moins l'une des revendications 1 à 8, dans lequel des moyens d'introduction d'air de refroidissement sont disposés sur un côté de poulie d'entraînement et/ou un côté de poulie entraînée dudit carter de boîte de vitesses (45, 37').

10. Moteur selon au moins l'une des revendications 2 à 8, dans lequel lesdits moyens de refroidissement d'air comprennent des moyens de nettoyage d'air de refroidissement (68).

11. Moteur selon au moins l'une des revendications 3 à 10, dans lequel lesdites sorties (70a, 70b) sont formées pour être situées dans la zone du carter de boîte de vitesses (45, 37') au-dessous de la ligne reliant les arbres de ladite poulie d'entraînement et ladite poulie entraînée (42, 38' ; 43, 39').

12. Moteur selon au moins l'une des revendications 6 à 11, dans lequel ladite entrée est formée pour se trouver au-dessus d'un arbre de la poulie entraînée (43, 39').

13. Moteur selon au moins l'une des revendications 6 à 12, dans lequel une entrée d'air est formée vers l'arrière d'un arbre de la poulie entraînée (43, 39') au niveau dudit carter de boîte de vitesses (45, 37') .

14. Moteur selon au moins l'une des revendications 6 à 13, dans lequel une entrée d'air est formée dans une zone entre les arbres de ladite poulie d'entraînement (42, 38') et de ladite poulie entraînée (43, 39') au niveau dudit carter de boîte de vitesses (45, 37').

15. Moteur selon au moins l'une des revendications 6 à 14, dans lequel une sortie d'air est formée vers l'avant d'un arbre de ladite poulie d'entraînement (42, 38') au niveau dudit carter de boîte de vitesses (45, 37').

16. Moteur selon au moins l'une des revendications 6 à 15, dans lequel une sortie d'air est formée dans une zone entre les arbres de ladite poulie d'entraînement (42, 38') et de ladite poulie entraînée (43, 39') au niveau dudit carter de boîte de vitesses (45, 37').
